# EUROPEAN PATENT SPECIFICATION

(11) **EP 1 196 849 B1**
(45) Date of publication and mention of the grant of the patent: **22.10.2003**
(21) Application number: 00946921.4
(22) Date of filing: 29.06.2000
(51) Int. Cl.: G06F 11/14

(54) **SYSTEM AND METHOD FOR SYNCHRONIZING COPIES OF DATA IN A COMPUTER SYSTEM**
SYSTEM UND VERFAHREN ZUM SYNCHRONISIEREN VON DATENKOPIEN IN EINEM RECHNERSYSTEM
DISPOSITIF ET PROCEDE SERVANT A SYNCHRONISER DES COPIES DE DONNEES DANS UN SYSTEME INFORMATIQUE

(30) Priority: 30.06.1999 US 345698; 30.06.1999 US 141758 P; 30.06.1999 US 345699; 30.06.1999 US 141762 P
(43) Date of publication of application: 17.04.2002
(73) Proprietor: Computer Sciences Corporation, Austin, TX 78759 (US)
(72) Inventor: BARTLETT, James, Arlington, TX 76014 (US); KERULIS, John, Little Elm, TX 75068 (US); NGAN, Robert, Dallas, TX 75287 (US); RASMUSSEN, Jay, Coppell, TX 75019 (US); RITTENHOUSE, Brian, Frisco, TX 75035-6321 (US)
(74) Representative: Casalonga, Axel
(86) International application number: US0018016
(87) International publication number: WO01001249

(56) References cited:
- EP-A- 0 926 608
- US-A- 5 434 994
- US-A- 5 586 310
- US-A- 5 689 706

## Description

### BACKGROUND OF THE INVENTION

### 1. Field of the Invention

The present invention generally relates to the synchronization of multiple copies of data in a computer system. More particularly, the present invention relates to the synchronization of copies of data stored on several computer systems linked together in a cluster.

### 2. Description of the Related Art

In a computer program that accesses various forms of data stored on disk or other non-volatile memory, it is often advantageous to store copies of high use data in volatile memory. Accessing data from volatile memory is typically much faster than accessing data from non-volatile memory. The process of storing high use data in volatile memory is commonly called caching.

Large-scale computer applications such as transactional applications used in the financial industry often make use of caching for performance reasons. These large-scale applications have increasingly demanded more processing power. Early mainframe computer systems typically contained one processor, one volatile memory, and arrays of non-volatile memory such as disk and tape. Later, multiple-processor systems were introduced which provide a significant performance boost over single-processor systems.

US-A-5 586 310 discloses a system and a method for managing multiple copies within a distributed database system comprising a plurality of processing machines.

One type of multiple-processor system is a Symmetric Multiprocessor system (SMP). An SMP comprises a set of processors that shares a number of common components, including volatile memory. SMPs offer significant performance advantages over single-CPU systems, and SMPs are scalable by adding additional processors. A major disadvantage of SMPs, however, is that significant resources must be dedicated to synchronizing the activities of the processors. A point may be reached at which adding additional processors actually decreases overall performance. Furthermore, in addition to the processing and scalability limitations, multiple-processor systems share a weakness with single-processor systems: when the system experiences planned or unplanned downtime, the processing services provided by the system are unavailable.

The demand for processing performance and scalability greater than that provided by multiple-processor systems and the demand for increased availability led to the development of clusters. In general, a cluster is a group of servers that can share resources and cooperate in processing.

Clusters may be categorized into three general types. The first type is a high-availability cluster. In a high-availability cluster, one server is typically the primary server and a second server is typically the backup server. If the primary server becomes unavailable due to failure or other reasons, processing is transferred to the backup server. In order to provide as seamless a transition as possible, the backup server is commonly kept in an idle state, negatively impacting the price-performance ratio of the system. High-availability clusters increase the availability of computing resources, but they do not provide significantly greater performance than earlier systems.

A second cluster type is the parallel cluster. Parallel clusters include two or more servers that share some resources; work may be split among the servers and performed in parallel. The servers in the cluster appear as multiple logical systems to the client. During processing, programs and data may be partitioned among the servers. The partitioning of program workload and data among the servers is difficult to manage. No single server has access to all of the data. Adding additional servers to the cluster requires repartitioning of the workload and data. Unbalanced workloads or data may overload one or more servers while other servers are underutilized. If a server fails, its workload must be passed to a backup server to maintain availability. This can be detrimental to performance if the backup server has a workload of its own or has a slow access path to the failed server's data.

The third cluster type is the single-system image cluster. The servers in a single-system image cluster appear as one logical system to clients and to application programs running on the cluster, hence the name "single-system." All servers in the cluster have access to all of the data, and any server in the cluster may run any transaction. Copies of a program may run concurrently on several servers in the cluster. The workload may be dynamically distributed among the servers. The single-system image cluster solves the availability and scalability problems and adds a level of stability by the use of redundant systems with no single points of failure. Effectively, the one logical system may be available year-round to clients and application programs without any outages. Hardware and software maintenance and upgrades may be performed without the loss of availability of the cluster and with little or no impact to active programs. The combination of availability, scalability, processing capability, and the logical system image make the single-system image cluster a powerful environment on which to base a large-scale transaction-based enterprise server.

Single-system image clusters typically share external non-volatile data storage, such as disk drives. Databases and other types of data permanently reside on the external storage. The servers, however, do not generally share volatile memory. Each server in the cluster operates in a dedicated local memory space.

As mentioned above, copies of a program may reside on several servers, and the programs may appear as one program to the client. Workload is distributed among the copies of the program. The programs may access shared data from external storage. For performance advantages, each program may cache high-use data in local memory space.

A single-system image cluster may include at least one Coupling Facility (CF) which provides hardware and software support for the cluster's data sharing functions. Typically, a CF may provide data synchronization for proprietary database architectures such as VSAM, IMS, and DB2, but a CF usually does not provide an application programming interface (API) to allow third-party application programs to directly access the data synchronization functions of the CF. Because of the lack of an API, the CF's data synchronization capabilities cannot be easily applied to data architectures other than a handful of proprietary architectures listed above.

The single-system image cluster may also provide a timer facility to maintain time synchronization among the servers. On a single-system image cluster, several operating system images such as MVS images may be running on at least one computer system. MVS and OS/390 are examples of mainframe operating systems. OS/390 is a newer version of the MVS operating system, and the terms OS/390 and MVS are used interchangeably herein. "MVS image" is used synonymously with "server" herein. Operating systems other than MVS may also run as servers on a single-system image cluster. Each server is allocated its own local memory space. The servers appear as one logical server to a client. Programs may be duplicated in the memory space of several servers. The workload of a program may be divided among several copies of the program running on different servers. The data required by the program is stored on shared non-volatile memory. A copy of the program may cache frequently used portions of the shared data in a local memory space. As in the case with the multiple servers appearing as one logical server, multiple copies of a program running on a single-system image cluster may appear as one logical program to the client.

The caching of copies of data in local memory areas by programs running on servers in a cluster may lead to a problem in a single-system image cluster environment. If copies of a program require the same data, each may cache a copy in local memory. If one copy of the program modifies a local copy of the data and, optionally, the base data on the external storage, copies of the data cached on other servers are no longer concurrent with the modified copy. It is therefore desirable to provide a method of efficient, timely, and reliable synchronization of data in a single-system image cluster environment. It is also desirable to provide an API to the coupling facility to allow software developers to make source code calls to the functions of the coupling facility, and to enforce data synchronization for data architectures other than proprietary databases.

The problem of data synchronization may also occur in computer systems in general where a program or programs make copies of shared data. Therefore, a solution to the data synchronization problem should preferably be applicable to computer systems in general as well as specifically to single-system image cluster systems.

### SUMMARY OF THE INVENTION

The present invention which is defined in detail in the appended independent claims 1, 31 and 61, provides various embodiments of an improved method and system for synchronizing copies of data in a computer system. In one embodiment, a program executing on a server maintains a list of data structures wherein one data structure is allocated to each copy of a primary data set that is read into volatile memory by the program, and wherein a data structure may be used to record the validity of a copy of the primary data. The term "validity" as used herein refers to the state of copies of a primary data set in comparison to the primary data set. If a copy of a data set is valid, the copy of the data set is concurrent with the primary data set. If a copy of a data set is invalid, the primary data set has been modified so that the copy of the data set is not concurrent with the primary data set. "Primary data set" is used herein to describe a grouping of data elements that may be stored in a memory medium external to the servers' local memory, and that may be shared among programs running on servers in the cluster. In one embodiment, a primary data set may be a grouping of records extracted from a database stored on disk. In one embodiment, a primary data set may be constructed from multiple sources on a data storage, wherein the data in the data set may not have a one-to-one correspondence to a physical data set in a database. In some embodiments of a database, records of the database may include at least one field including a unique identifier, or key, which is used to identify and locate copies of the records.

As a copy of a primary data set is created, a validity data structure may be assigned to the copy from the list and a field in the data structure may be initialized to indicate the copy is valid. The field may be referred to as a validity flag, and may have two states: valid and invalid. A flag set to valid indicates that the associated copy of the data set is synchronized with other copies of the data set; a flag set to invalid indicates that at least one other copy of the data set has been modified since the associated copy of the data set was last updated. The program may keep track of which data structure in the list is assigned to a copy of the data set. In one embodiment, the list of data structures may be a section of memory wherein each bit of the memory location serves as a validity data structure, and wherein a bit set to "0" may indicate that the copy is valid and a bit set to "1" may indicate that the data copy is invalid. In another embodiment, a data structure may comprise a plurality of bytes wherein each byte serves as a validity data structure. In yet another embodiment, the validity data structure may be a collection of fields, wherein a first field includes a memory address or some other link to the data set copy used by the program to associate the validity flag with the data set copy, and a second field includes the validity flag. In one embodiment, the validity data structure may be internally allocated in the program's memory space. In another embodiment, the validity data structure may exist in memory external to the program. In yet another embodiment, the data structure may be maintained in hardware, such as a set of registers, for example. In one embodiment, when a program modifies a copy of a data set, the primary data set may be replaced with the modified copy. The validity flags of other copies of the data set may then be set to invalid. When a program needs to access a copy of the data set, the associated validity flag may be checked for validity of the data set. If the flag is valid, the second copy of the data set may be accessed directly by the program. If the flag is invalid, the second copy of the data set may be synchronized before access by overwriting with the contents of the primary data set. The program may then set the validity flag for the second data set copy to valid. In one embodiment, one or more distinct primary data sets may be copied by one or more programs. In one embodiment, one list of data structures may be maintained for copies of all distinct data sets. In another embodiment, one list may be maintained for copies of each distinct data set.

In one embodiment, more than one program may be running on the computer system, the programs may be sharing at least one data set, and the validity data structure list may be maintained in memory external to the programs. A synchronization program may perform the management of the synchronization of data sets. The synchronization program may assign a validity data structure to each copy of a data set the programs cache in local memory. When a first program modifies a local copy of a data set, the first program may replace the primary data set with the modified copy and notify the synchronization program that the data set has been modified. The synchronization program may then set the validity flags of all cached copies of the modified data set to invalid. In one embodiment, when a second program requires access to a local cached copy, the second program may directly check the validity flag. In another embodiment, the second program may request the synchronization program to check the status of the validity flag. The synchronization program may then check the validity flag and return the status of the flag to the second program. If the validity flag is invalid, the second program may refresh the local cached copy with the primary data set before using the local cached copy. In one embodiment, the second program may then set the validity flag for the local cached copy to valid. In another embodiment, the second program may notify the synchronization program that the data set copy has been updated, and the synchronization program may then set the associated validity flag to valid.

In one embodiment, the computer system may be a single-image cluster which may include several servers capable of cooperative parallel processing of data. External non-volatile memory may be shared by the servers. A program may be copied to and executed simultaneously on one or more servers. A data synchronization program may perform tasks associated with the synchronization of data sets. In one embodiment, a coupling system configured to manage the synchronization of data may be linked to servers in a cluster. In one embodiment, a coupling system may reside on a computer system dedicated to the coupling system task. In another embodiment, the coupling system may reside as a server on a computer system in the cluster with other servers in the cluster sharing the computer system. In some embodiments, a cluster may include more than one coupling system. In one embodiment, a synchronization program cooperate with a coupling system to manage the synchronization of data among programs running on servers in the cluster. A synchronization program may act as an interface to a coupling system for programs running on a server. In one embodiment, the synchronization program may include an application programming interface that includes source code level functions that may be called from the source code of other programs. The functions may allow programs to request the coupling system and coupling system interface to perform data synchronization tasks. In one embodiment, a synchronization program may reside on a coupling system. In another embodiment, one copy of a synchronization program may reside on each server in the cluster connected to a coupling system. In yet another embodiment, a copy of a synchronization program may be assigned to each program that is running on a server. In one embodiment, a synchronization program may establish and maintain a communications link with a coupling system. In one embodiment, a validity data structure may exist on each server in the cluster. In another embodiment, a validity data structure may exist on a coupling interface and may be shared among servers in the cluster. In yet another embodiment, a validity data structure may exist on each computer system in the cluster, and may be shared among servers on a computer system.

In one embodiment, a coupling system may include a table of indexes which may be used to keep track of copies of data sets cached on the servers. The index table may contain information describing the data set copies, information useful for locating a data set copy, and information useful for locating a validity flag associated with a data set copy. In one embodiment, a program running on a server may create a copy of a primary data set in local memory. The program may send a message to the synchronization program notifying the synchronization program of the creation of the data set copy. The message may include information describing the data set copy. In one embodiment, the message may include a unique identifier or key extracted from records in the data set. The synchronization program may then forward the message to the coupling facility. The coupling facility may create an entry in an index table for the data set copy. The entry in the index table may include information used to locate the validity flag for the data set copy. In some embodiments, a key passed in the message from the first program may be used in the index data structure to identify the data set copy. The coupling facility may initialize a validity flag to indicate that the data set copy is valid. The coupling facility may then send a message to the synchronization program including information describing the location of the validity flag for the data set copy. The synchronization program may then forward the message to the program, which may store the validity flag location information in memory. The process of programs caching copies of data sets, requesting synchronization of the copies, and of a coupling system assigning validity flags to the copies may be repeated as several programs cache copies of primary data sets in local memory.

At some point, a first program may desire to modify a cached copy of the data set. In one embodiment, the first program may directly check the status of a validity flag assigned to the cached copy. In another embodiment, the first program may send a message requesting the status of the validity flag to the synchronization program, which may then read the status of the validity flag and return the status to the first program. If the validity flag indicates the cached copy is valid, the first program may modify the cached copy directly. The first program may replace the primary data set with the cached copy after modifying the cached copy. The first program may then send a message to the synchronization program indicating that the primary data set has been modified. The message may include information identifying which program made the modification. In one embodiment, the message may include a unique identifier or key read from the records in the data set. The synchronization program may forward the message to the coupling facility. Upon receiving the message, the coupling facility may read the entries in the index table and identify the entries for all copies of the data set currently cached by using the data description included in the entries. In some embodiments, a key included in the message may be used to locate entries in the index table by comparing the key to information stored in the entries. The coupling facility may then use the locations of the validity flags stored with the data descriptions in the entries in the index table to locate and set the validity flags of cached copies of the data set other than the newly modified copy to invalid, indicating that the copies are not concurrent with the primary data set. In one embodiment, the validity flags may be set to invalid simultaneously. In another embodiment, the validity flags may be set to invalid serially.

At some point after validity flags have been set to indicate that cached copies of a data set are invalid, a second program may need to access a cached copy of a data set. The second program may be running on the same server as the first program or on another server in the cluster. The second program may require read only access or it may require write access to modify the cached copy. In one embodiment, a program may directly check the status of a validity flag associated with a cached copy. In another embodiment, a program may send a message requesting the status of a validity flag to a synchronization program, which would then read the status of the flag and return the status to the program. If the validity flag indicates that the cached data is invalid, the second program may replace the cached copy of the data set with the primary data set. In one embodiment, a program may directly set a validity flag for a cached copy to valid. In another embodiment, a program may send a message to a synchronization program indicating that a cached copy has been updated, and the synchronization program may set the associated validity flag to valid.

### BRIEF DESCRIPTION OF THE DRAWINGS

Figure 1 illustrates a server in which programs share cached data;
Figure 2 illustrates a server with programs using local copies of a data set and validity flags according to one embodiment;
Figure 3 illustrates a server with programs using local copies of a data set and a program to manage data synchronization according to one embodiment;
Figure 4 is a high-level block diagram of a single-system image cluster;
Figure 5 illustrates a cluster system without program-level data synchronization;
Figure 6 illustrates a cluster system with program-level data synchronization according to one embodiment;
Figure 7 is a flowchart illustrating the use of validity flags in data synchronization according to one embodiment;
Figure 8 is a flowchart illustrating two programs using validity flag to synchronize data according to one embodiment;
Figure 9 is a flowchart illustrating creating indexes to copies of data sets during the synchronization process according to one embodiment;
Figure 10a is a flowchart illustrating a synchronization program managing the data synchronization process for other programs according to one embodiment;
Figure 10b is a continuation of flowchart 10a;
Figure 11 is a flowchart illustrating the synchronization process for multiple copies of a data set according to one embodiment;
Figure 12a is a flowchart illustrating a coupling system interface providing an interface between a coupling system and multiple programs to provide data synchronization according to one embodiment;
Figure 12b is a continuation of flowchart 12a;
Figure 12c is a continuation of flowchart 12b.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed.

### DETAILED DESCRIPTION OF THE DRAWINGS

The term "computer system" as used herein generally describes the hardware and software components that in combination allow the execution of computer programs. The computer programs may be stored in software, hardware, or a combination or software and hardware. A computer system's hardware generally includes a processor, memory media, and Input/Output (I/O) devices. As used herein, the term "processor" generally describes the logic circuitry that responds to and processes the basic instructions that operate a computer system. The term "memory medium" includes an installation medium, e.g., a CD-ROM, or floppy disks; a volatile computer system memory such as DRAM, SRAM, EDO RAM, Rambus RAM, etc.; or a non-volatile memory such as optical storage or a magnetic medium, e.g., a bard drive. The memory medium may comprise other types of memory or combinations thereof. In addition, the memory medium may be located in a first computer in which the programs are executed, or may be located in a second computer which connects to the first computer over a network. The term "memory" is used synonymously with "memory medium" herein.

A computer system's software generally includes at least one operating system, a specialized software program that manages and provides services to other software programs on the computer system. Software may also include one or more programs to perform various tasks on the computer system and various forms of data to be used by the operating system or other programs on the computer system. The data may include but are not limited to databases, text files, and graphics files. A computer system's software generally is stored in non-volatile memory or on an installation medium. A program may be copied into a volatile memory when running on the computer system. Data may be read into volatile memory as the data is required by a program.

A computer system may comprise more than one operating system. When there is more than one operating system, resources such as volatile and non-volatile memory, installation media, and processor time may be shared among the operating systems, or specific resources may be exclusively assigned to an operating system. For example, each operating system may be exclusively allocated a region of volatile memory. The region of volatile memory may be referred to as a "partition" or "memory space." A combination of an operating system and assigned or shared resources on a computer system may be referred to as a "server." A computer system thus may include one or more servers.

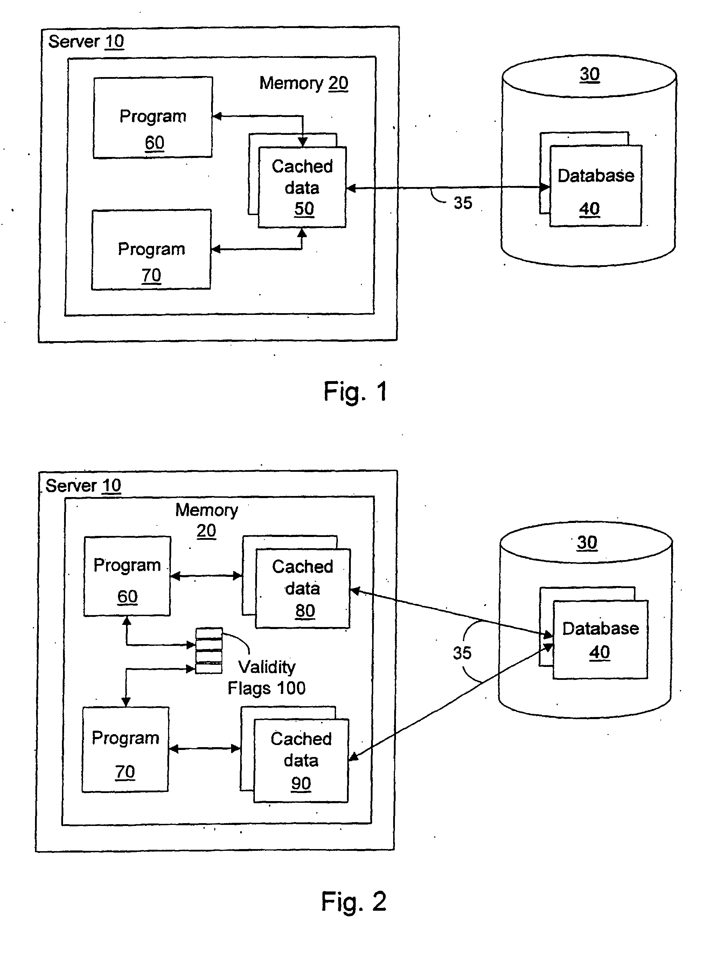

### Figure 1 - A server in which programs share cached data

Figure I illustrates a server 10 including a memory 20 connected to a data storage 30 by a data bus 35. Server 10 may include a single processor or several processors performing in parallel (processors not shown). A primary copy of a database 40 may be stored on the data storage 30. A program 60 and a program 70, running on server 10, may read a data set from database 40 into memory 20. The data set may be stored in memory 20 as cached data 50. Program 60 and program 70 may share access to cached data 50. If, for example, program 60 modifies cached data 50, then program 70 may immediately see the modification on a subsequent access of cached data 50; there is therefore no need for data synchronization.

### Figure 2 - A server with programs using local copies of a data set and validity flags

Figure 2 illustrates one embodiment of a server 10 including memory 20 connected to data storage 30 by a data bus 35. Server 10 may include a single processor or several processors performing in parallel (processors not shown). A list of validity flags 100 may exist on server 10. In one embodiment, validity flags 100 may be provided on another medium, for example on a disk drive or in hardware registers. A primary copy of a database 40 may be stored on data storage 30. A program 60, running on server 10, may read a copy of a primary data set from database 40 into memory 20. The data set may be stored in memory 20 as cached data 80. A validity flag in validity flags 100 may be set to indicate cached data 80 is valid. A program 70, also running on server 10, may read a copy of the same primary data set from database 40 into memory 20. The data set may be stored in memory 20 as cached data 90. A second validity flag in validity flags 100 may be set to indicate cached data 90 is valid. Program 60 may then modify cached data 80, and program 60 may replace the primary data set in database 40 with cached data 80. Program 60 may then search validity flags 100 for validity flags to other copies of cached data 80. Finding the validity flag for cached data 90, program 60 may set the validity flag to invalid to indicate cached data 90 is out of synchronization with cached data 80 and database 40. Prior to accessing cached data 90, program 70 may check the validity flag in validity flags 100 for cached data 90. Finding the flag to be set to invalid, program 70 may then synchronize cached data 90 by reading the primary set from database 40 into cached data 90. Program 70 may then set the flag for cached data 90 in validity flags 100 to valid, indicating that cached data 90 is synchronized.

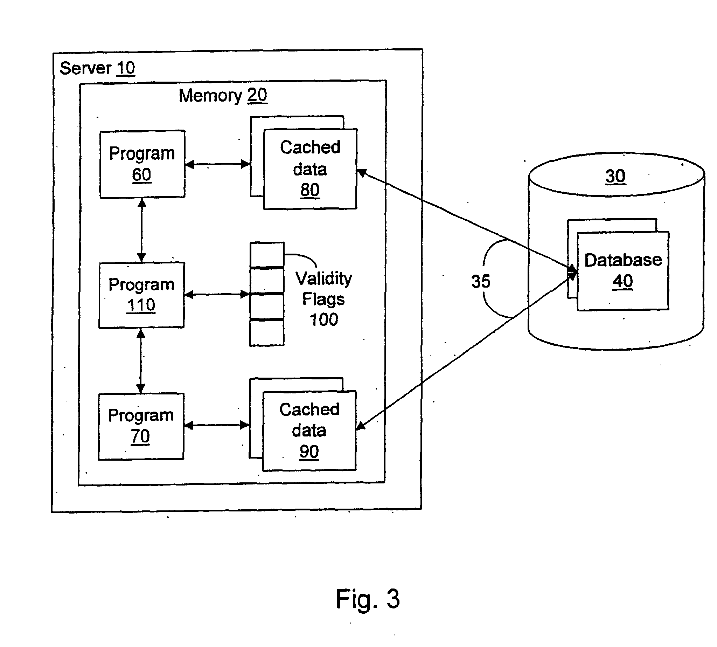

### Figure 3 - A server with programs using local copies of a data set and a program to manage data synchronization

Figure 3 illustrates one embodiment of a server 10 including a memory 20 connected to a data storage 30 by a data bus 35. Server 10 may include a single processor or several processors performing in parallel (processors not shown). A list of validity flags 100 may exist on server 10. In some embodiments, validity flags 100 may be provided on another medium, for example on a disk drive or in hardware registers. A primary copy of a database 40 may be stored on data storage 30. A data synchronization program 110 may be running on server 10. A program 60 running on server 10 may read a copy of a primary data set from database 40. The data set may be stored in memory 20 as cached data 80. Program 60 may then notify synchronization program 110 of the creation of cached data 80. Program 110 may then set a flag in validity flags 100 to indicate cached data 80 is valid. A program 70 running on server 10 may read a copy of the same primary data set from database 40 as that read by program 60. The data set may be stored in memory 20 as cached data 90. Program 70 may then notify synchronization program 110 of the creation of cached data 90. Synchronization program 110 may then set a validity flag in validity flags 100 to indicate cached data 90 is valid.

Program 60 may then modify cached data 80 and replace the primary copy of the data set in database 40 with cached data 80. Program 60 may then notify synchronization program 110 that cached data 80 has been modified. Synchronization program 110 may then search validity flags 100 for flags to other copies of the primary data set. Finding the validity flag for cached data 90, program 110 may then set the flag to invalid to indicate cached data 90 is out of synchronization with cached data 80 and the primary data set. In one embodiment, prior to accessing cached data 90, program 70 may check the flag in validity flags 100 for cached data 90. In another embodiment, program 70 may notify synchronization program 110 that program 70 needs to access cached data 90, and synchronization program 110 may then check the validity flag for cached data 90 in validity flag structure 100 and return the validity flag's status to program 70. If the validity flag is invalid, program 70 may then synchronize cached data 90 by reading the primary data set from database 40 into cached data 90. Program 70 may then notify synchronization program 110 that cached data 90 is synchronized. Synchronization program 110 may then set the validity flag for cached data 90 in validity flags 100 to valid, indicating that cached data 90 is synchronized.

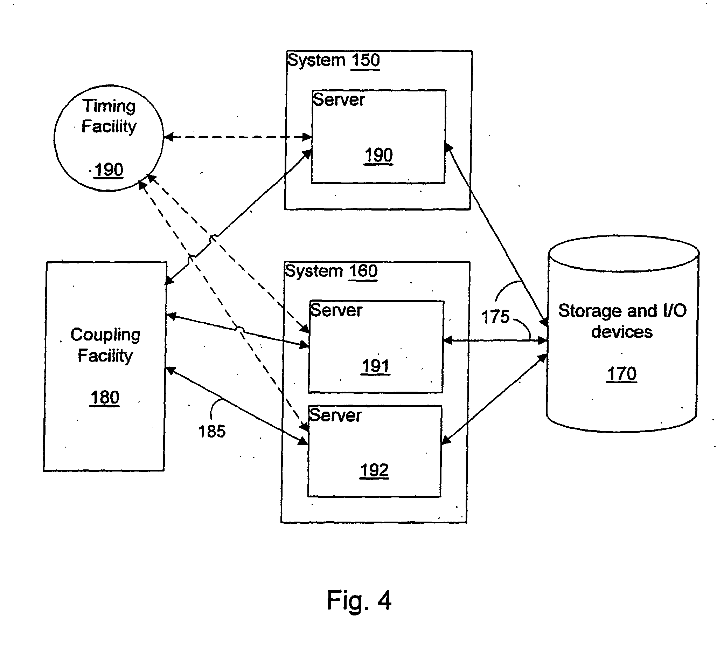

### Figure 4 - A high-level block diagram of a single-system image cluster system

Figure 4 illustrates an embodiment of a single-system image cluster system that is suitable for implementing the synchronization system and method as described herein. The system may include multiple systems (two systems, systems 150 and 160, are shown) running mainframe operating systems such as OS/390 or MVS operating systems; at least one coupling facility 180 to assist in multisystem data sharing functions, wherein the coupling facility 180 is physically connected to systems in the cluster with high-speed coupling links 185; a timer facility 190 to synchronize time functions among the servers; and various storage and I/O devices 170 such as DASD (Direct Access Storage Devices), tape drives, terminals, and printers, connected to the systems by data buses or other physical communication links.

Also shown in system 160 is a system partitioned into more than one logical system or server (two servers, servers 191 and 192, are shown on system 160). The single-system image cluster system provides dynamic workload balancing among the servers in the cluster. To a client working at a terminal or to an application program running on the cluster, the servers and other hardware and software in a single-system image cluster system appear as one logical system.

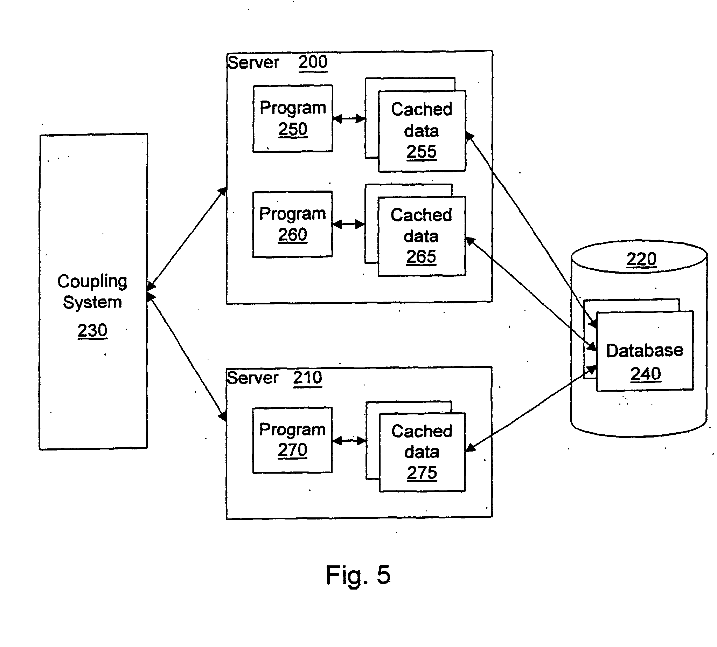

### Figure 5 - A cluster system without program-level data synchronization

In Figure 5, an embodiment of a cluster system is shown without program-level data synchronization. Servers 200 and 210 may be connected to a storage device 220 and to a coupling system 230. A program 250, running on server 200, may read a copy of a primary data set from a database 240 and store the copy in a cached data 255. A program 260, running on server 200, may read a copy of the same primary data set from database 240 and store the copy in a cached data 265. A program 270, running on server 210, may also read a copy of the same primary data set from database 240 and store the copy in a cached data 275. Program 250 may then modify cached data 255 and write cached data 255 to database 240. Program 270 may then access cached data 275. Since coupling system 230 may not provide synchronization for the programs' cached data, cached data 275 may not be concurrent with the latest changes in database 240. It is possible that program 270 may write the non-concurrent cached data 275 to database 240 after program 250 has updated the database, overwriting the changes made by program 250.

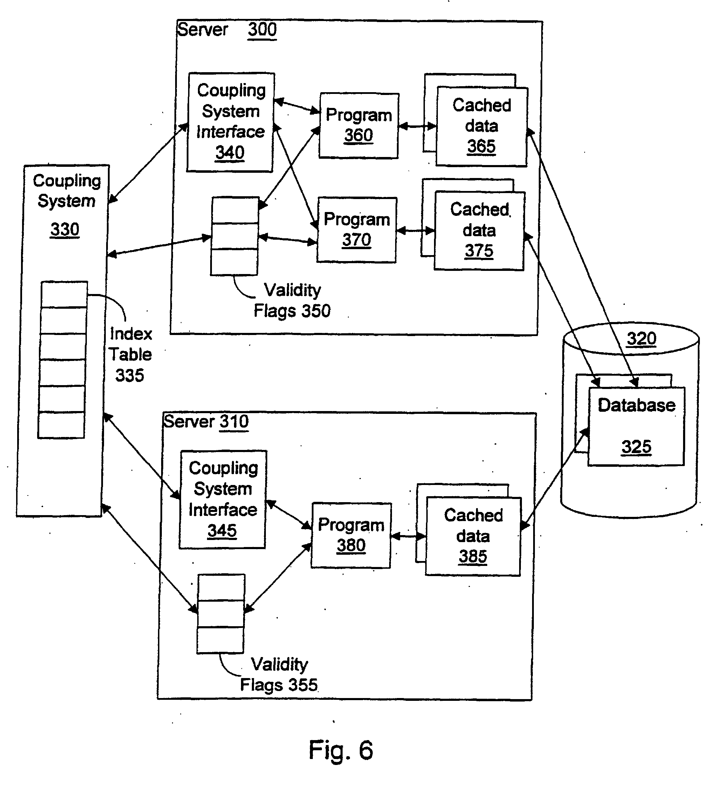

### Figure 6 - A cluster system with program-level data synchronization

Figure 6 illustrates one embodiment of a cluster system with program-level data synchronization. A server 300 and a server 310 may be connected to a storage device 320 and to a coupling system 330. In one embodiment, the cluster is a single-system image cluster system, and the coupling system 330 is a Coupling Facility (CF). A database 325 may be stored on a storage device 320. A coupling system interface 340 may be running on server 300 and may establish a link with coupling system 330. The link may be maintained as long as coupling system interface 340 is running. A coupling system interface 345 may be running on server 310 and may establish a link with coupling system 330. The link may be maintained as long as coupling system interface 345 is running. Server 300 may include a list of validity flags 350, and server 310 may include a list of validity flags 355. In one embodiment, the cluster is a single-system image cluster system, and validity flags may be represented by bits in a Hardware Service Area (HSA) which may be located on systems in the cluster. A program 360, running on server 300, may read a copy of a primary data set from database 325 and store the copy in a cached data 365. Program 360 may then send a registration request to coupling system interface 340. The registration request may include a unique identifier or key which identifies cached data 365. Coupling system interface 340 may then forward the registration request to coupling system 330. Receiving the registration request, coupling system 330 may assign a validity flag in validity flags 350 to cached data 365, and may initialize the validity flag to valid. Coupling system 330 may then create an entry for cached data 365 in an index table 335. The entry may include information identifying the program 360 requesting data registration, information identifying the cached data 365 including the key passed in the registration request, and information identifying the location of the validity flag in validity flags 350 assigned to cached data 365. Coupling system 330 may then send a message including the identity of the validity flag in validity flags 350 assigned to cached data 365 to coupling system interface 340. Coupling system interface 340 may then forward the message to program 360. Program 360 may store the identity of the validity flag assigned to cached data 365 in program memory.

A program 370, running on server 300, may read a copy of the same primary data set from database 325 and store the copy in a cached data 375. Program 370 may then send a registration request to coupling system interface 340. The registration request may include a unique identifier or key which identifies cached data 375. Coupling system interface 340 may then forward the registration request to coupling system 330. Coupling system 330 may then perform the same synchronization tasks for cached data 375 as listed above for cached data 365.

A program 380, running on server 310, may also read a copy of the primary data set from database 325 and store the copy in a cached data 385. Program 380 may then send a registration request to coupling system interface 340. The registration request may include a unique identifier or key for cached data 385. Coupling system interface 340 may then forward the registration request to coupling system 330. Receiving the registration request, coupling system 330 may assign a validity flag in validity flags 355 to cached data 385, and may initialize the flag to valid. Coupling system 330 may then create an entry for cached data 385 in an index table 335. The entry may include information identifying the program 380 requesting data registration, information identifying the cached data 385 including the key passed in the registration request, and information identifying the location of the validity flag in validity flags 355 assigned to cached data 385. Coupling system 330 may then send a message including the identity of the validity flag in validity flags 355 assigned to cached data 385 to coupling system interface 345. Coupling system interface 345 may then forward the message to program 380, which may store the identity of the validity flag assigned to cached data 385 in program memory.

Program 360 may then modify cached data 365 and update the primary data set in database 325 with cached data 365. Program 360 may then send a cross invalidate message to coupling system interface 340. Coupling system interface 340 may then forward the cross invalidate message to coupling system 330. In one embodiment, a cross invalidate message may inform a coupling system that a primary data set has been modified, requiring the validity flags for all cached copies of the primary data set to be set to invalid. In one embodiment, a cross invalidate message may contain a key identifying the cached data that was modified and used to update the primary data set. Receiving the cross invalidate message, coupling system 330 may then search index table 335 for entries associated with copies of the same data set as in cached data 365. In one embodiment, a key passed in a cross invalidate message may be compared with keys previously passed in registration messages and stored in entries in an index table, with matching keys identifying copies of the same data set. Finding entries in the index table 335 for cached data 375 and cached data 385, coupling system 330 may use the validity flag location information stored in the index table entries to set the validity flags assigned to cached data 375 and cached data 385 to invalid, signifying that cached data 375 and cached data 385 are not concurrent with the primary data set. In one embodiment, a coupling system sets the flags to invalid one at a time or serially. In another embodiment, a coupling system sets the flags to invalid simultaneously.

Program 380 may then require access to cached data 385. In one embodiment, a program may directly check the validity flag assigned to a cached data in a list of validity flags. In another embodiment, a program may request the status of a validity flag from a coupling system interface, which may then check the validity flag assigned to a cached data in a validity flags list and return to the program the status of the validity flag assigned to the cached data. If the status of the flag is valid, program 380 may access cached data 385 directly. If the status of the flag is invalid, program 380 may replace cached data 385 with the latest version of the data set from database 325 before accessing cached data 385. In one embodiment, a program may then sets a validity flag in a list of validity flags associated with a cached data to valid. In another embodiment, a program notifies a coupling system interface that a cached data has been updated, and the coupling system interface sets the validity flag in the validity flags associated with the cached data to "valid."

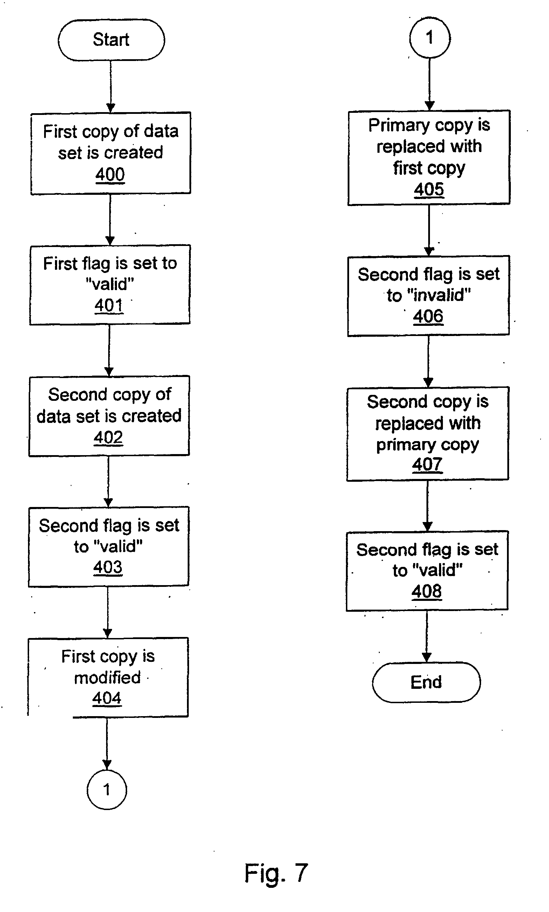

### Figure 7 - A flowchart illustrating the use of validity flags in data synchronization

In Figure 7, a flowchart is presented to illustrate one embodiment of a method of data synchronization. In step 400, a first copy of a primary data set is created. A first validity flag is assigned to the first copy and initialized to "valid" in step 401. In step 402, a second copy of the primary data set is created. A second validity flag is assigned to the second copy and initialized to valid in step 403. In step 404, the first copy of the data set is modified, and the primary copy is replaced with the modified first copy in step 405. In response to the primary copy being updated, the second flag is set to invalid in step 406. In step 407, the second copy is replaced with the primary copy as a result of the validity flag associated with the second copy being invalid. In step 408, the second flag is set to valid to indicate the second copy has been updated.

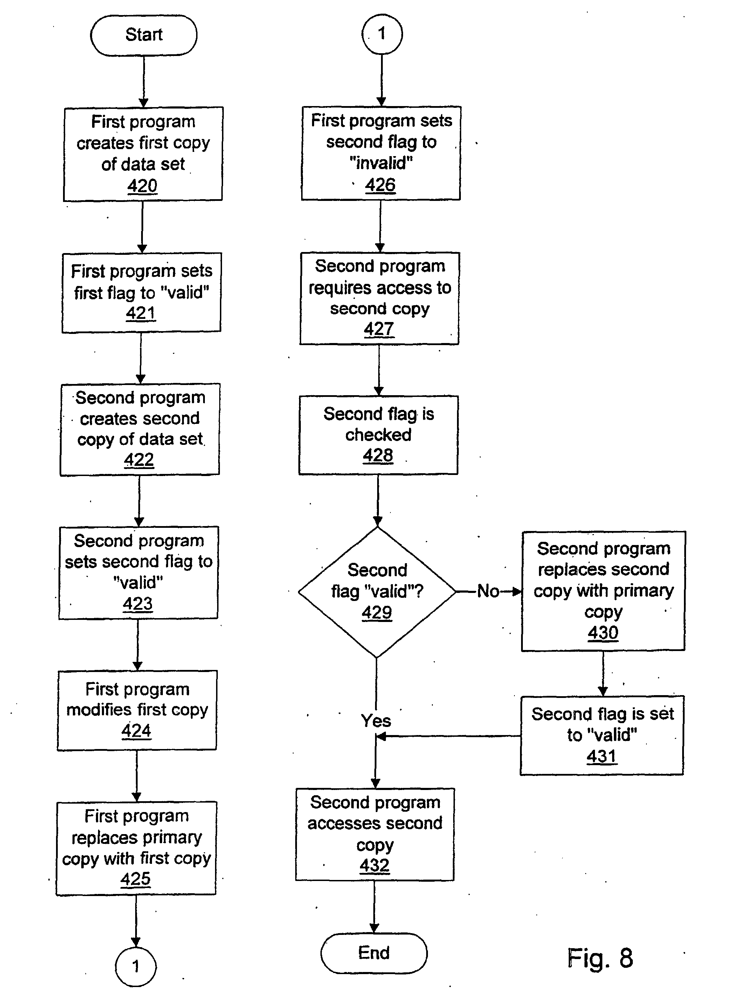

### Figure 8 - A flowchart illustrating two programs using validity flags to synchronize data

In Figure 8, a flowchart is presented to illustrate one embodiment of a method where two programs cooperate in data synchronization. In step 420, a first program creates a first copy of a primary data set. The first program sets a first validity flag to valid for the first copy in step 421. In step 422, a second program creates a second copy of a primary data set. The second program sets a second validity flag to valid for the second copy in step 423. In step 424, the first copy of the data set is modified by the first program, and the primary copy is replaced with the modified first copy by the first program in step 425. The validity flag associated with the second copy is set to invalid by the first program in step 426. In step 427, the second program requires a read or write access to the second copy. Before accessing the second copy, the second program checks the status of the second validity flag in step 428. If the second flag is valid, the second program proceeds to step 432 and accesses the second copy. If the second flag is invalid, the second program proceeds to step 430 and replaces the second copy with the primary copy. In step 431, the second flag is set to valid by the second program to indicate the second copy has been updated, and the second program proceeds to step 432 and accesses the second copy.

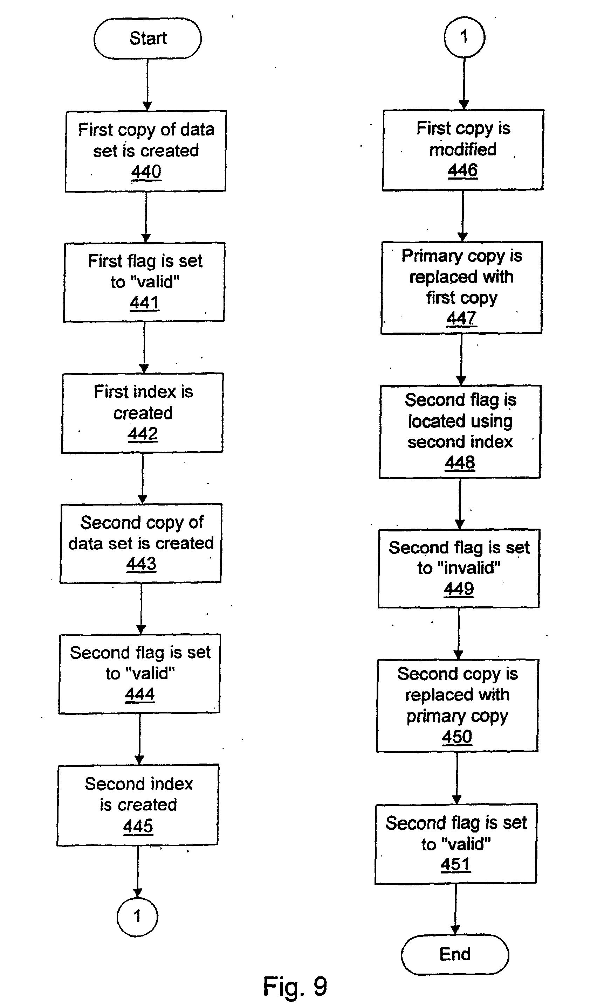

### Figure 9 - A flowchart illustrating creating indexes to copies of data sets during the synchronization process

In Figure 9, a flowchart is presented to illustrate one embodiment of a method of data synchronization where an index is created for the data set copies. In step 440, a first copy of a primary data set is created. A first validity flag is assigned to the first copy and initialized to valid in step 441. In step 442, a first index to the first copy is created and stored in an index table. The first index may include a unique identifier, or key, that identifies the first copy. The first index may also include information that may be used to locate the first flag. In step 443, a second copy of the primary data set is created. A second validity flag is assigned to the second copy and initialized to valid in step 444. In step 445, a second index to the second copy is created and stored in the index table. The second index may include a unique identifier, or key, that identifies the second copy. The second index may also include information that may be used to locate the second flag. In step 446, the first copy of the data set is modified, and the primary copy is replaced with the modified first copy in step 447. In step 448, the index table may be searched using the first index key, the first index key may be matched to the second index key in the index table, and the second flag located with the flag location information in the second index. The second flag is set to invalid in step 449. In step 450, the second copy is replaced with the primary copy as a result of the validity flag associated with the second copy being invalid. In step 451, the second flag is set to valid to indicate the second copy has been updated.

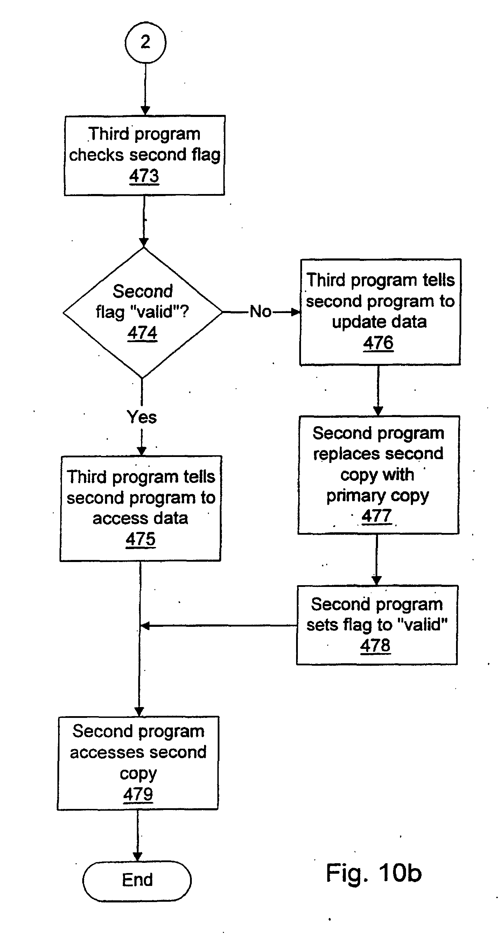

### Figure 10a and 10b - A flowchart illustrating a synchronization program managing the data synchronization process for the other programs

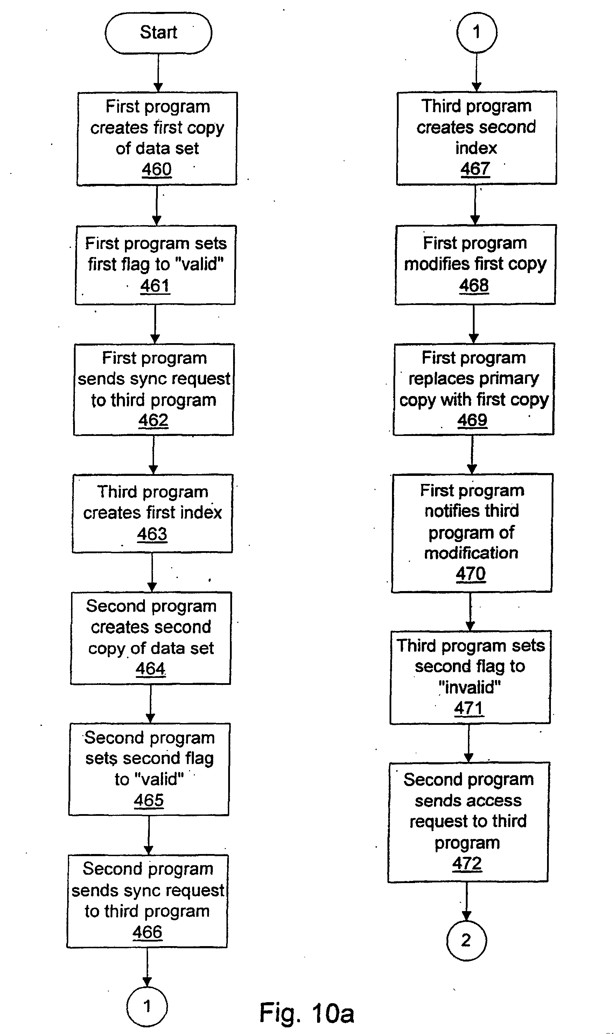

Figures 10a and 10b present a flowchart illustrating one embodiment of a method of data synchronization where a synchronization program manages the synchronization process for other programs. In step 460, a first program creates a first copy of a primary data set. A first validity flag is assigned to the first copy, and the first program initializes the first flag to valid in step 461. In step 462, the first program sends a synchronization request to the third program (the synchronization program). In step 463, a first index to the first copy is created by the third program and stored in an index table. The first index may include a unique identifier, or key, that identifies the first copy. The first index may also include information that may be used to locate the first flag. In step 464, a second program creates a second copy of the primary data set. A second validity flag is assigned to the second copy, and the second program initializes the second flag to valid in step 465. In step 466, the second program sends a synchronization request to the third program. In step 467, a second index to the second copy is created by the third program and stored in an index table. The second index may include a unique identifier, or key, that identifies the second copy. The second index may also include information that may be used to locate the second flag. In step 468, the first copy of the data set is modified by the first program, and the primary data set is replaced with the modified first copy by the first program in step 469. In step 470, the first program notifies the third program that the primary copy has been modified. In step 471, the third program sets the second flag to invalid. The second program requires access to the second copy and sends an access request to the third program in step 472. The third program checks the second validity flag in step 473. In step 474, if the second validity flag is valid, the third program proceeds to step 475 and tells the second program to access the second copy. In step 474, if the second validity flag is invalid, the third program proceeds to step 477 and tells the second program the second copy must be updated before accessing it. In step 476, the second program replaces the second copy with the primary copy. In step 478, the second program sets the second flag to valid to indicate the second copy has been updated. The second program then accesses the second copy in step 479.

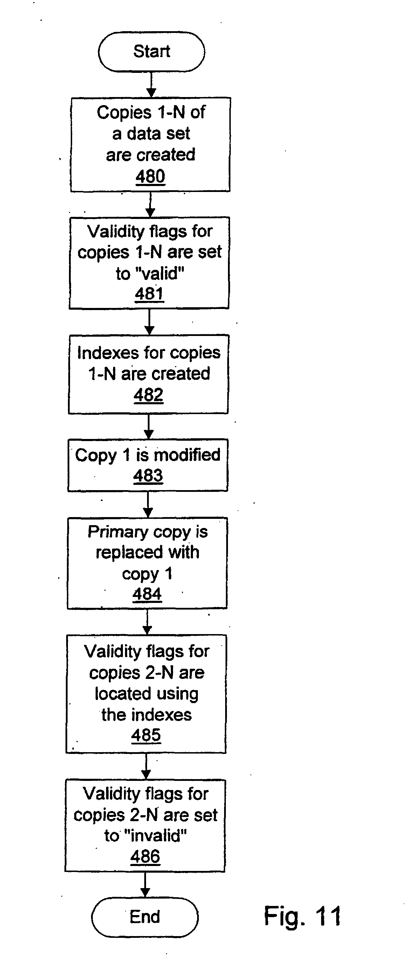

### Figure 11 - A flowchart illustrating the synchronization process for multiple copies of a data set

Figure 11 illustrates one embodiment of a method of data synchronization applied to multiple copies of a data set. It is important to note that all of the examples of embodiments described herein may be extended to cover multiple copies as described in this embodiment. N is used to represent a number of copies that may be created. Examples of factors that may limit the number of copies that may be created include, but are not limited to, an operating system-imposed limit, an application-imposed limit, a limit on the number of resources such as validity flags and index table entries, or a limit on memory available. In step 480, copies 1-N of a data set are created. Validity flags are initialized to "valid" for copies 1-N in step 481, and indexes for copies 1-N are created and stored in an index table in step 482. In step 483, a copy 1 is modified, and the primary copy is replaced with copy 1 in step 484. In step 485, the index table is searched for all indexes that match the index of copy 1, and indexes 2-N are located. In step 486, validity flag location information stored in indexes 2-N is used to set validity flags 2-N to invalid.

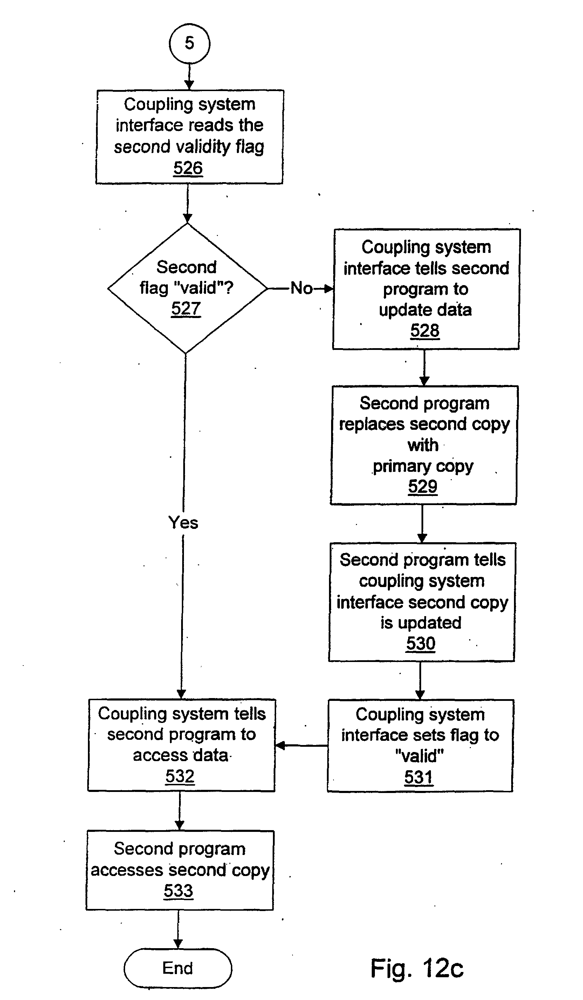

### Figure 12a, 12b, and 12c - A flowchart illustrating a coupling system interface between a coupling system and multiple programs to provide data synchronization

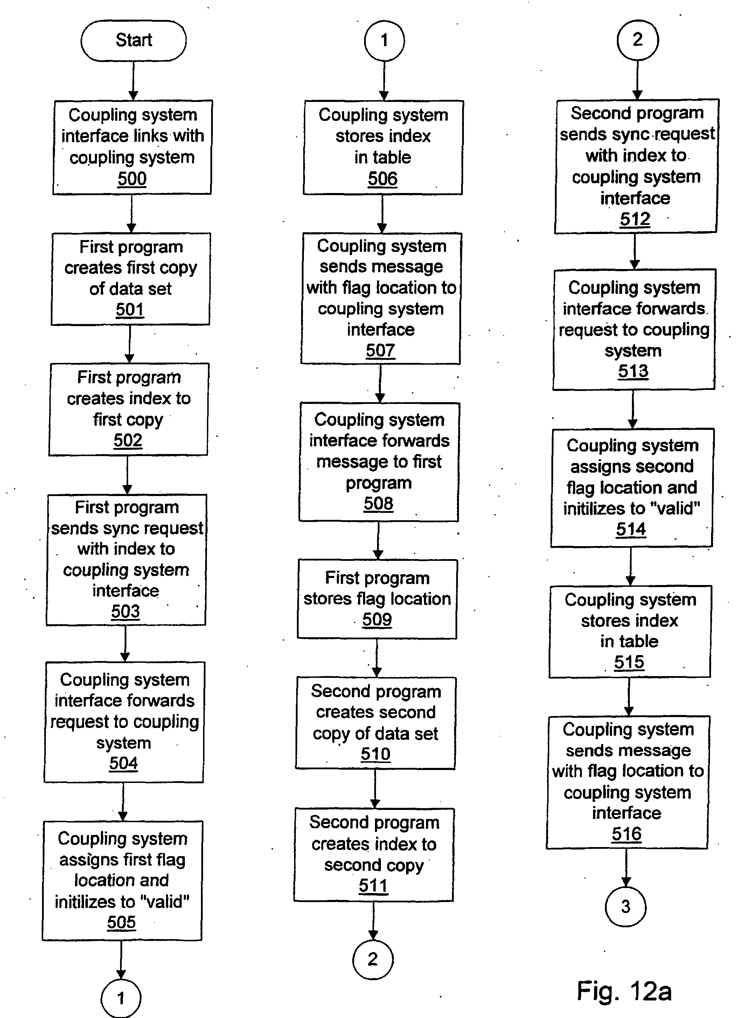

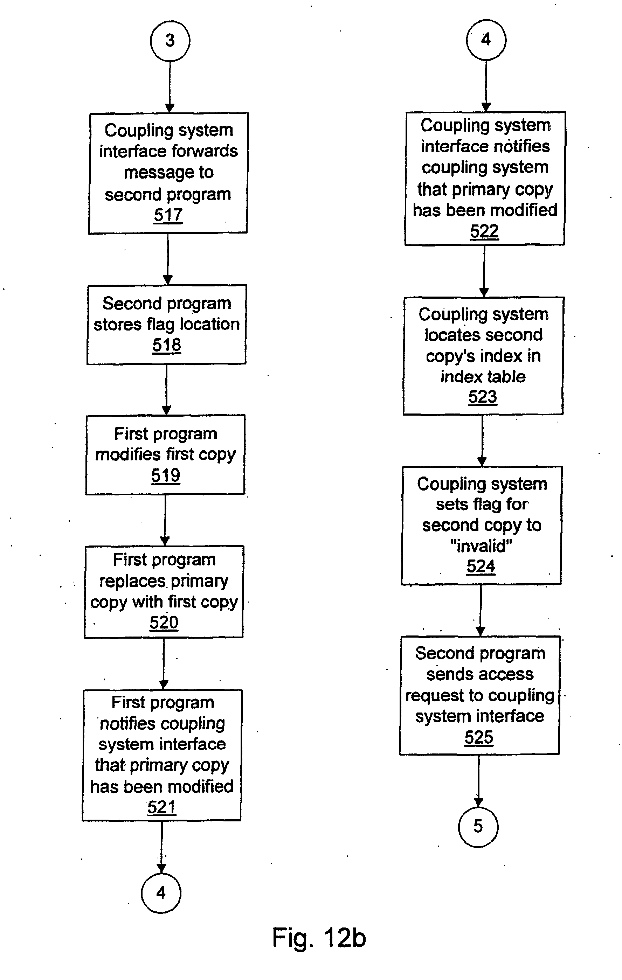

In Figures 12a-12c, a flowchart is used to illustrate one embodiment of a cluster system including a coupling system and a coupling system interface between the coupling system and multiple programs running on the cluster's servers. In one embodiment, the cluster system may be a single-system image cluster system with at least one Cluster Facility (CF). In step 500, a coupling system interface, a program running on a first server in the cluster, establishes a link with the coupling system. In one embodiment, the link may be maintained by the coupling system interface as long as the coupling system interface is running and the coupling system is available.

In step 501, a first program running on the first server creates a first copy of a primary data set. In one embodiment, a data set may be extracted from a database stored on a data storage device shared by the servers in the cluster. In one embodiment, a data set may be constructed from multiple sources on a data storage, wherein the data in the data set may not have a one-to-one correspondence to a physical data set in a database. Examples of data sets include, but are not limited to, a data record, a data group, a data table, a random table, and a row from a table. A data record may be defined as a grouping of one or more data items. The data items typically provide information about an object or entity. Data items in a record may be referred to as fields in the record. A data group may be defined as a collection of logically related data fields that may be stored in contiguous memory. A data table may be defined as a type of data set in which data records are stored in rows, a row including one or more records, and where the table includes one or more types of row. A random table may be defined as multiple occurrences of a data group accessed by a specific key via a hashing algorithm. A row may be defined as a row extracted from a data table or random table.

In step 502, the first program creates an index to the first copy. In one embodiment, an index may be created from a field or fields of a data set. The field or fields used to create an index may include a unique identifier or key that may serve to distinguish the data set from other data sets in the database. Examples of types of data sets that may include a key used to uniquely identify the data set include, but are not limited to, a record, a group, a data table, a random table, and a row. In one embodiment, a key is created for data sets when the data sets are initially created in the database. In another embodiment, a utility program may be used to modify an existing database by creating a key for data sets in the database. In one embodiment, the index may also include a field containing information that may be used to distinguish between copies of a data set Thus, the index may be useful for distinguishing among different data sets, for identifying copies of a particular data set, and for distinguishing among copies of a data set during the data synchronization process.

In step 503, the first program sends a synchronization request, which may be referred to as a registration request, to the coupling system interface. The request may include the index created by the first program. In one embodiment, a request may also include information identifying a program as the sender of the request. In one embodiment, the request may be sent to the coupling system interface, and the coupling system interface may process the request immediately. In one embodiment, if a coupling system interface is busy at the time a program attempts to send the request, the program may wait for the coupling system interface to complete its current operation before sending the request. In another embodiment, a coupling system interface may include a message queue, a program may post a request in the message queue, and the coupling system interface may process messages posted in the message queue in a priority order. An example of a priority order that may be used in some embodiments is first-in, first-out (FIFO) processing. A number of embodiments utilizing other priority ordering schemes will be obvious to one skilled in the art.

In step 504, the coupling system interface forwards the registration request to the coupling system. The coupling system then processes the registration request. In step 505, the coupling system assigns a first validity flag in a validity structure on the first server to the first copy and initializes the first flag to valid. In one embodiment, a validity structure may be a portion of memory where each bit in the portion represents one flag. In another embodiment, a validity structure may be a list of data structures, a data structure may include one or more fields, and one or more fields may represent the validity flag. In one embodiment, a validity flag may be represented by one bit, 1 (bit set) may indicate valid data, and 0 (bit clear) may indicate invalid data. In another embodiment, a flag may be represented by one bit, 1 (bit set) may indicate invalid data, and 0 (bit clear) may indicate valid data. In another embodiment, a validity flag may include more than one bit. In yet another embodiment, a validity flag may be a field in a data structure, and the field may be set to different values to represent valid and invalid data sets. In one embodiment the system may be a single-system image cluster system, and the flag may be a bit in the Hardware Service Area (HSA). In step 506, the coupling system stores the index in an index table on the coupling system. In one embodiment, a coupling system may append information that may be used to identify the location of a validity flag to an index. In one embodiment, information used to identify a validity flag location may include an identifier for a server the flag is located on, a memory address of a validity structure on the server, and an identifier for a field in the validity structure including the flag. In another embodiment, the system may be a single-system image cluster system, a validity flag may be a bit in the Hardware Service Area (HSA), and a vector may be used to identify the bit in the HSA.

In step 507, the coupling system sends a confirmation message to the coupling system interface. In one embodiment, a confirmation message may include information used to identify a validity flag assigned to a cached copy. In another embodiment, a confirmation message may include information to identify a program that created a cached copy. In yet another embodiment, a confirmation message may include information to identify a cached copy. In one embodiment, a coupling system interface may keep a copy of information in a confirmation message in local memory, which then may be used to directly access a validity flag associated with a cached copy. In step 508, the coupling system interface forwards the message to the first program. In step 509, the first program stores in its local memory information from the message that may be used to locate the first validity flag.

In steps 510-518, the second program follows the same process the first program followed in steps 501-509. In the following description, the second program is described as running on a second server in the cluster, but it is to be understood that the process may be applied to a second process running on the first server. In step 510, the second program creates a second copy of the primary data set on the second server. In step 511, the second program creates an index to the second copy. The second program sends a registration request including the index to a coupling system interface running on the second server in step 512. In step 513, the coupling system forwards the registration request to the coupling system. In step 514, the coupling system assigns and initializes a second validity flag in the validity flag structure located on the second server. In step 515, the coupling system stores the index and the second flag location in the index table. The coupling system then sends a confirmation message to the coupling system interface in step 516. The message is forwarded to the second program by the coupling system interface in step 517. In step 518, the second program stores the second flag location information in local memory.

The first program checks the first validity flag, finds the flag to be valid, and modifies the first copy in step 519. The first program updates the database with the modified first copy in step 520. In step 521, the first program sends a message to the coupling system interface indicating that the first copy has been modified. The message may be called a "cross invalidation" message. In one embodiment, the message may include the index identifying the first copy. The coupling system interface forwards the message to the coupling system in step 522.

The coupling system then processes the cross invalidation message. In step 523, the coupling system uses the information in the message to search the index table for other copies of the same data set as the first copy, and finds the index for the second copy. In one embodiment, the index passed in the message is used to match with other indexes in the index table. A key in the index may uniquely identify the data set that has been copied. In one embodiment, information in the index may be used to distinguish among copies of a data set, so that the search skips the index to the first copy when the index to the first copy in the index table exactly matches the index to the first copy in the message. After locating the index to the second copy, the coupling system sets the second validity flag for the second copy to invalid in step 524. In one embodiment, the coupling system may use information stored with the index in the index table to find the second validity flag.

At some point, the second program may desire to access the second copy of the data set. In one embodiment, the second program may send an access request message to the coupling system interface in step 525, and the coupling system interface may read the second validity flag in step 526. In one embodiment, the second program may send information used to locate the second flag in the access request message. In another embodiment, the coupling system interface may have stored the information identifying the location of the second flag when processing the confirmation message from the coupling system, and may use the stored information to read the second flag. After reading the second flag, the coupling system interface checks the results of the read in step 527. If the flag is valid, the coupling system interface proceeds directly to step 532 and sends a message to the second program telling it to proceed with the access of the second copy. If the flag is invalid, the coupling system interface proceeds to step 528 and sends a message to the second program telling it to update the second copy before proceeding. In step 529, the second program updates the second copy with the primary copy from the database, and then sends a message notifying the coupling system interface that the second copy has been updated in step 530. The coupling system interface sets the second flag to valid in step 531. In step 532, the coupling system interface sends a message to the second program telling the second program to proceed with the access of the second copy. In one embodiment, steps 530 and 531 may be replaced by the second program directly setting the second flag to valid after updating. Finally, in step 533 the second program accesses the second copy.

Various embodiments further include receiving or storing instructions and/or data implemented in accordance with the foregoing description upon a carrier medium. Suitable carrier media include memory media or storage media such as magnetic or optical media, e.g., disk or CD-ROM, as well as signals such as electrical, electromagnetic, or digital signals, conveyed via a communication medium such as networks and/or a wireless link.

### Additional Information

The basic shared memory model used by the MVS operating system tends to become less efficient as the number of machines (CPU's) sharing memory increases. Typically, each machine must take an ENQ on everything it uses whether any other machine is using it or not The generally accepted number of processors at which the overall thruput DROPS is around 15.

The basic concept behind sysplex is that a processor takes a registered interest in anything it needs (buffer, record, and so on). This registration of interest generates a linear model of use. Sysplex tends to have a 5% overhead but scales well beyond MVS. Parallel sysplex is an industry term for a sysplex using the extended facilities of a Coupling Facility to provide data sharing. Normally, the term sysplex and parallel sysplex are used interchangeability. In one embodiment, a program may use the original sysplex XCF facilities or may fully exploit the XES facilities of a parallel sysplex.

Some applications may be heavily dependant on a common parameter file and may utilize an in-memory (common storage) cache to vastly speed access to these parameters by staging frequently used items in memory. Use of in-memory cache in addition to any DBMS or hardware cache may provide access to parameters this side of the DBMS.

An implementation of a managed cache according to the prior art was in private storage. As clients moved to multiple processing regions (IMS MPP's and CICS MRO's), the cache was moved to common storage, for example, storage shared by multiple address spaces. Generally, common memory is not available in a sysplex environment. Without a common cache, integrity of the cache cannot be provided if any maintenance of items stored in cache is allowed. Some application programs have always been able to access application owned areas of common storage (PDG in CSA). These were typically accessed as simple tables.

Recent applications have used a generic random table facility rather than use a PDG. An API may provide direct access by key, no data group size limit, and the ability to easily use secondary keys. These random tables may be stored in common storage. Again, common memory is not available in a sysplex environment. Without a common cache, integrity of random tables cannot be provided as the tables in different machines would never be in sync.

Sysplex may provide no shared memory as well as simultaneous updates to DBMS from multiple MVS images viewed by user as single image. An application may provide an in-memory cache of frequently used items to vastly improve performance. An application may utilize a PDG and random tables housing application level data for the same reason.

With simultaneous updates to a database from multiple MVS images, the cached data could easily become backlevel in relation to the hardened version (DASD or database version) with detrimental impact on transactions running on those multiple MVS images.

In summary, a synchronization program may know everything cached by a program in every MVS image and if an item is changed by one image, it tells all the other images to update. These items may be a database item or format depending on options selected, a PD Table, PDG, Random Table, or Random Table ROW.

In one embodiment, substantially every item with sysplex synchronization enabled is registered with the sysplex coupling facility when read into the cache. If the item is purged from the cache, the registered interest is removed.

Sysplex may use a technique of Cross Invalidation through HSA (hardware system area). A cross invalidate request is a simultaneous synchronous notification of all MVS images, with a registered interest, without any CPU interrupts. A synchronization program checks the validity bit (HSA vector) before allowing an application to access an item. If invalid, the program is instructed to reread from the DBMS or otherwise refresh the item. Each use of a synchronized item is preceded by a test of the validity bit. The macro used for this test has an approximately 30 instruction overhead. Added to this is the increased instruction path to set up the test.

In one embodiment, the synchronization program is a cancelable started task running from an authorized library in supervisor mode. It initializes and spends almost all of its life in a wait. Other than the inherent cost of running a quiescent address space, its costs should be negligible. If specific formats or PCDs are never changed in production, changing their definitions to not require sysplex synchronization reduces the overhead and improves performance. The synchronization program environment may run on a standard sysplex. In one embodiment, any collection of CPUs that can run a sysplex may be used to support the synchronization. Any significant production use of the MVS Logger on a sysplex may require either a non-volatile coupling facility (for example, UPS on CPU running the CF) or dual CFs to ensure integity of the logged data within the CF.

Once sysplex is intended for Production use, most users then plan for a fault tolerant sysplex (including dual sysplex timers, coupling facility, and so on). During planning for a sysplex migration, a user should consider the synchronization program as he or she would any sysplex exploiting system.

In one embodiment, the synchronization program can run on any available CF, standalone (9674), LPAR'd (9672 or 711 base machine), or under an ICMF (511 or 711 based machines). HLA (high level ASSEMBLER) is part of OS/390 and is required for the synchronization program, as well as all sysplex exploiting systems. The synchronization program should run on all levels of CF's with no impact. In one embodiment, the synchronization. program has a moderate footprint, either in sysplex mode or stand alone. The largest impact may be due to the sysplex requirement that every item to be controlled have a unique ID across all MVS images in the sysplex.

In order to provide an absolutely unique ID for every item in a database, as well as all PDGs and random table rows the program may bard assign an ID to every dictionary item. Initially assignment may be made during installation of the program and, ongoing, by database maintenance. The ID is reassigned during any migration. This may cause a 16 byte overhead per database item. Once active, each item registered with the coupling facility may be assigned a vector. The combination of 16 byte ID and vector may cause an increase of 20 bytes per active item.

The synchronization program may utilize two types of CF structures, Cache and List. The synchronization program may use a directory-only cache for all synchronization. Sizing is heavily dependant on the level of tabling being done as well as product mix.

The ID assigned to each database item is generated from a one byte connection ID assigned by sysplex to the synchronization program's coupling facility structure connection (unique within the sysplex) and the standard STORE CLOCK. The resultant 9 byte ID is completely unique number within the sysplex.

Coupling Facility REBUILD's may be triggered by the system due to a CF failure or by operator request. Sysplex may notify every synchronization program that a REBUILD is required. The synchronization program may freeze all transactions within its processing regions and participates in the rebuild. As a Directory Only CF Cache can only be reallocated (none of its contents may be copied), the rebuild tends to be a very fast process. Once the new CF is built, transactions processing resumes. Once started, all transactions attempting to access the CF being rebuilt (for example, all of them) issues an ENQ and wait until the CF is rebuilt or the synchronization program releases all enqueues via termination. Once the REBUILD is complete, the structure is empty. This effectively purges all ECSA storage in each MVS image, that is, a complete cache purge!

As stated earlier, common storage is generally not available in sysplex. The objectives of a synchronization program supporting and exploiting sysplex facilities may include providing the benefits of common storage cache by synchronization of multiple caches.

The nature of access to the facilities provided by XES is that it has numeric restrictions, for example, maximum 32 MVS images in a sysplex, maximum of 256 connections from any one MVS image, and so on. Additionally, compared to a normal Coupling Facility request, the initial connection to a CF Structure has a fairly high overhead. The connection is anchored to the system TCB and it is not desirable to use the CICS or IMS TCB for a connection. Note also that many of the exits required as part of the XES services must run SRB mode. All of this led to the use of a server address space. The address space is designed make and own the connections to a CF Structure.

In one embodiment, the synchronization program:
1. Starts and goes non-swappable.
2. Obtains a system LX and makes available to the programs a set of routines.
3. Makes a connection with the appropriate CF structure.
4. WAITs for commands from programs.

In one embodiment, the synchronization program's design is for an extremely fault tolerant 24 / 7 server with the following properties. It may allow automatic restart of any of its sub-tasks that abend up to a site defined limit. It may allow all subroutines to be shutdown, reloaded from a library, and restarted. It may fully support Coupling Facility Alter and Rebuild events. It may provide for full tracing of all internal and external events. It may allow full Dumps on request without interruption of service. It may spin all dumps to GDG for use while the synchronization program continues. It may mark all Task Work Areas with unique Eye-Catchers. It may use Event Queues associated with all WAIT/POST communication among and between tasks to ensure all events are responded to.

In one embodiment, all items cached in a CF Structure must have a unique 16 byte ID. This is required for the CF to track which items have registered interest. To ensure uniqueness, the ID is generated from a Store Clock and the CF Connection Number as well as Format and Company.

During installation, the entire database is converted. This increase of DASD is 16 bytes per database item. Any item added online has an ID assigned at creation time. The ID is not stored on any database D/R or RCS formatted file, it is therefore recreated on any migration or installation.

The GTF has previously supported Default and Named indexes for the database cache. Internally, a program used the KEY length to determine which index to search, located the index, and then searched. Note that due to index sharing, the size of the indexes had little to do with any one format.

In one embodiment, Default and Named indexes are no longer supported. Rather, each format/company using tabling has its own index allocated directly off a format definition table. This technique removes an entire layer of computation (key to index decision) and search (list of indexes). In addition, as the size of any one index is reduced (only contains one Format/Company) the speed of the actual index search is increased. Having each Format/Company in its own index also eases support for Tabling Options. As the lock taken during maintenance is at the index level this provides locking at a much lower level than the previous Default or Named index technique and reduces lock contention.

In one embodiment, a synchronization level allows one to reduce or stop synchronization for a specific Format/Company from Item to Format to None. This may be used at one's discretion to reduce or remove the overhead of synchronization for those formats that one never maintains in production or those just see no benefit in providing synchronization.

Whenever a data group is allocated to a transaction, a program allocates the memory and sets each field to its low collating value (blanks, packed zero, low values, and so on). By default this is done by a program real time for each use of a data group. Prior approaches supported a little-used technique of storing a data group template, or copy of an empty but initialized DG, in a data space.

In one embodiment, a template or pre-initialized DG is created whenever a data group is genned. The template is stored in a new format and tabled within a Process Dictionary chained off the Genned DG Definition. Whenever a DG is to be allocated to a transaction, storage is obtained and the template is copied over the storage. This may provide noticeable reduction in program overhead, especially in high volume transactions that use numerous data groups. The improved logic may replace a loop of 12-18 instructions per field with approximately 8 instructions per data group.

Permanent Data Groups may be accessed directly by application programs, for example, without a service program. In order to synchronize PDG changes across a sysplex, however, a synchronization program must KNOW when a PDG changes.

In one embodiment, a program registers interest in a PDG on initial allocation. The program validates a PDG on every allocation. If invalid, for example changed by some other MVS image in the sysplex, a field of the PDG is set to indicate this. The maintenance program(s) may be invoked because the PDG is new, the contents are being changed, or the PDG is invalid. Its actions are different in each case. For a new PDG, no additional logic is required. Whenever a PDG is changed, the maintenance program(s) must issue a new activity so the synchronization program notifies all other Images with a registered interest that their PDG is backlevel. The sysplex term is XI (cross invalidate). Responding to an invalid PDG, the maintenance program(s) may rebuild the PDG and then issue the same activity so the synchronization program re-registers this image as having a valid PDG. The sysplex term is RR (read and register).

In one embodiment, the existing Random Table function is enhanced to support synchronized tables across a sysplex. This includes modification of the base definition of random tables to indicate the type of table synchronization and ROW REBUILD activity as well as internal changes in the support modules.

In one embodiment, the Random Table definition is modified to provide two new fields and an improved view of the table definition. If a synchronization program is in use, the validity of a table Definition (from the internal Table of Tables maintained by the Random Table service program) is checked when first used by a transaction and the definition reloaded from a database if required. Table synchronization may be None, Table, or Row. All tables using synchronization have table level synchronization for source as the table validity is checked before any ROW testing. In one embodiment, all tables using ROW synchronization (even those using Load On First Access) MUST provide an Estimated Number Of Entries. In one embodiment, synchronization always requires a unique ID. For Random Table Rows, this ID includes the Slot number HASHed from its natural (or alternate) key. Tables used only as work table use NONE as synchronization level. TABLE level synchronization causes programs to signal the synchronization program to cross invalidate all other MVS images when a table is updated or deleted in a MVS image. This option uses the ability of the random table system to respond no table exists and allow applications to rebuild. ROW level synchronization causes programs to signal a synchronization program to cross invalidate all other registered users whenever a row is modified (ADD, CHG, DEL). This does not guarantee that the random tables are the same, just that any items (rows) in multiple MVS images are the same. The next instance of a program to see the invalid indicator on a row invokes the ROW REBUILD activity defined for the table. The application-supplied program is passed the row key and must rebuild (ADD) or delete it.

The row rebuild activity is invoked when the slot is cross invalidated by actions from another MVS image. All rows attached to the slot (synonyms) are rebuilt, for example, as follows according to one embodiment. First, the row is moved into the primary index target DG. The row is deleted. The row rebuild activity is issued. The return code is tested. An example Row Rebuild exit program may include the following steps. The program may receive the row key in its normal data group. A rebuild is attempted, and the example may read a PCD. If the row data can be rebuilt, a row action of ADD is returned. If the data cannot be rebuilt, an action of DELETE is returned.

In one embodiment, the synchronization program includes a server address space used by the program's online and batch regions for cache synchronization across a sysplex. When any of a synchronization program's sub-tasks abend, the owning task automatically restarts the failed task. This can result in a loop condition, if the restarted sub-task repeatedly fails with the original abend. To prevent this situation, a synchronization program keeps a count of the number of abends for each sub-task, when a sub-task exceeds the abend limit, it is no longer automatically restarted. Because a synchronization program runs for extended periods of time, it is also possible that intermittent abends over a long period could exceed the abend limit. This condition is prevented by periodically resetting the task abend counter to zero. Note: In one embodiment, the abend counter is not reset if it has exceeded the abend-limit. Once the limit has been reached, it can only be reset using a restart or reload commands.

In one embodiment, the task work areas are located by scanning extended private in the dump for the eye-catcher string. If the task has been restarted, there may be old copies of the task's WA in the dump. A token is part of the eye-catcher string to make it unique to the task, a program locates the correct WA (that is, the one for the currently executing task) because it generates the eye-catcher string using the token from a TCB.

In one embodiment, event Queues are the synchronization program's method for asynchronous inter-task communications. It is equivalent to a MVS extended ECB with the following advantages: it is not required to be authorized, and logic is not single threaded.

In one embodiment, each synchronization program's task has one or more event queues associated with it. Other tasks (and PC routines) may request that actions be performed by a task be inserting an event queue element (EQE) to the appropriate event queue. Event Queue Block is a synchronization program's control block describing an event queue. Event Queue Element is a storage cell holding data for an individual event. These are chained to EQBs.

In one embodiment, the synchronization program may either have the same name on each system, or be given a unique name per system. Each MVS image requires a synchronization program for each of the program environments (that is, a set of databases) on that system that participates in data sharing across the sysplex.

At initialization, an exclusive enqueue is issued. This is to prevent multiple instances of a synchronization program independently servicing a single cache structure.

A trace buffer may manage trace table buffers using Data-In-Virtual (DIV) services. In one embodiment, trace table buffers are actually DIV windows into a linear data set. Each time a SWITCH command is received, the offset of the window in the data set is shifted (incremented) by the length of the trace table buffer.

In one embodiment, a coupling facility connection manager manages the connection to the Coupling. Facility (CF) cache structure, responds to CF connection exit events, and handles structure rebuilds. When a coupling facility connection manager connects to the CF structure (either during initialization or after being restarted), it starts off with no registered interest to any items therefore anything tabled in the CSA is invalid so a program's CSA is always invalidated upon connecting to the CF structure.

In one embodiment, there is a command to manually connect to, or disconnect from, the Coupling Facility cache structure. When a synchronization program has been manually disconnected, it does not attempt to automatically reconnect as it would if it were disconnected due to a failure. A manual connect request can be used to force a synchronization program to attempt a connection if it failed to detect an event indicating connection is possible, or to reconnect after a manual disconnect. A CONNECT command issued when a synchronization program is already connected forces any transactions on the suspended transaction queue to be resumed (that is posted). In one embodiment, the access logic before normal read-only access of a PDG includes: Valid? If so, continue with processing, use of data or UPDATE as required. Being updated by another task? If so, return a SYSTEM BUSY, TRY LATER type message and exit. Invalid? If so, invoke the initialization routine.

One of the update type programs is an application program updating a PDG during normal business logic. In one embodiment, it is recommended that each and every one of these add the following lines to the program to inform a program (and therefore a synchronization program) that the PDG has changed. In one embodiment, no other changes may be required to update logic.

## Claims

1. A method composing:
reading a first copy of a primary data set (40,240,325) in a primary memory location (30,220,320);
storing the first copy in a first memory location (80,255,365);
setting (401,421,441,461) a first validity flag to indicate that the first copy is valid;
reading a second copy of the primary data set in the primary memory location (30,220,320);
storing the second copy in a second memory location (90,275,385);
setting (403,423,444,465) a second validity flag (355) to indicate that the second copy is valid;
modifying (404,424,446,468) the first copy; **characterized in that** the method further comprises
setting (406,426,449,471) the second validity flag to indicate that the second copy is invalid in response to modiying the first copy.

2. The method of claim 1, further comprising:
replacing the primary data set with the modified first copy after the modifying of the first copy and before the setting of the second validity flag to indicate that the second copy is invalid;
replacing the second copy with the primary data set after the setting of the second validity flag to indicate that the second copy is invalid; and
setting the second validity flag to indicate that the second copy is valid after replacing the second copy with the primary data set.

3. The method of claim 2, wherein a first program is associated with the first copy, and a second program is associated with the second copy.

4. The method of claim 1, wherein replacing the second copy with the primary data set further comprises:
reading the second validity flag in response to a program requesting access to the second copy; and
replacing the second copy with the primary data set before granting the access request if the second validity flag indicates that the second copy is invalid.

5. The method of claim 2, further comprising:
creating a first index corresponding to the first copy, wherein the first index is stored in a fourth memory location, wherein the first index is created after reading the first copy from the primary data set; and
creating a second index corresponding to the second copy, wherein the second index is stored in the fourth memory location, wherein the second index is created after reading the second copy from the primary data set.

6. The method of claim 5, further comprising:
locating the second validity flag by using the second index before setting the second validity flag to indicate that the second copy is invalid.

7. The method of claim 6, wherein an index comprises:
a first field comprising a description of a copy of the data for which the index was created; and
a second field comprising a memory location for a validity flag for the copy of the data set for which the index was created.

8. The method of claim 7, further comprising:
matching the first index and the second index by comparing the first field of the first index and the first field of the second index; and
wherein locating the second validity flag further comprises locating the second validity flag by referencing contents of the second field of the second index.

9. The method of claim 8, further comprising:
reading and storing a plurality of copies of the primary data set at respective memory locations;
setting a validity flag to indicate the copy is valid in response to reading and storing the copy; and
creating an index to the copy in the fourth memory location in response to reading and storing the copy.

10. The method of claim 9, further comprising:
setting the validity flag of every copy other than the first copy to invalid after modifying the first copy.

11. The method of claim 8, wherein a first program is associated with the first copy and a second program is associated with the second copy.

12. The method of claim 11, further comprising:
the first program requesting that a third program synchronize the first copy with other copies of the primary data set;
the third program creating the first index corresponding to the first copy in the fourth memory location in response to the first program requesting that the third program synchronize the first copy with other copies of the primary data set;
the second program requesting that the third program synchronize the second copy with other copies of the primary data set; and
the third program creating the second index corresponding to the second copy in the fourth memory location in response to the second program requesting that the third program synchronize the second copy with other copies of the primary data set.

13. The method of claim 11, further comprising:
the first program modifying the first copy;
the first program replacing the primary data set with the first copy;
the first program notifying a third program that the primary data set has been modified; and
the third program setting the second validity flag to indicate that the second copy is invalid in response to the first program notifying the third program that the primary data set has been modified, wherein the third program is configured to manage the synchronization of copies of data sets.

14. The method of claim 13, further comprising:
the second program notifying the third program that the second program desires to access the second copy;
the third program reading the second validity flag;
when the second validity flag is invalid the third program notifying the second program that the second copy is invalid,
the second program reading the primary data set and replacing the second copy with the primary data set,
the second program setting the second validity flag to indicate that the second copy is valid; and
when the second validity flag is valid the second program accessing the second copy.

15. The method of claim 13, further comprising:
the third program reading the second validity flag;
the second program reading the primary data set and replacing the second copy with the primary data set when the second validity flag is invalid; and
the second program setting the second validity flag to valid.

16. The method of claim 11, wherein the first program and the second program are executable on a computer system, wherein the computer system is a cluster, and wherein the cluster comprises:
a plurality of computers, wherein a computer comprises a local memory and at least one validity flag, and wherein a copy of a data set that is stored in the local memory is assigned at least one corresponding validity flag;
a coupling system comprising a local memory, wherein the coupling system is connected to each of the computers in the cluster, and wherein the coupling system is configured to coordinate data sharing of the cluster, and
an external data storage shared by the computers in the cluster.

17. The method of claim 16, wherein each computer further comprises a coupling system interface program configured to communicate between the coupling system and a plurality of programs running on the computer.

18. The method of claim 17, wherein the coupling system interface program establishes and maintains a communications link to the coupling system.

19. The method of claim 17, wherein the local memory of a first computer in the cluster comprises the first memory location, the local memory of a second computer in the cluster comprises the second memory location, the external data storage comprises the primary memory location, and the local memory of the coupling system comprises the fourth memory location.

20. The method of claim 19, further comprising creating a copy of the primary data set in the local memory of a plurality of computers in the cluster, wherein the creation of the copy comprises:
creating an index corresponding to the copy of the primary data set in the local memory of the coupling system;
assigning a validity flag to the copy of the primary data set; and
setting the validity flag to indicate that the copy of the primary data set is valid.

21. The method of claim 20, further comprising:
setting the validity flag of every copy other than the first copy to invalid after modifying the first copy.

22. The method of claim 19, wherein the first computer further comprises a first program associated with the first copy, and the second computer further comprises a second program associated with the second copy.

23. The method of claim 22, further comprising:
the first program reading the first copy of the primary data set from the primary data set in the primary memory location;
the first program storing the first copy in the first memory location;
the first program creating the first index to the first copy;
the first program sending a request to synchronize the first copy with other copies of the primary data set to the coupling system interface, the request comprising reading the first index to a third program;
the coupling system interface program forwarding the request to synchronize the first copy to the coupling system;
the coupling system storing the first index to the first copy in the fourth memory location in response to the request;
the coupling system sending a first token to the coupling system interface, the first token comprising a location for the validity flag to be used for the first copy;
the coupling system interface program sending the first token to the first program;
the first program storing the first token in the first memory;
the second program reading the second copy of the primary data set from the primary data set in the primary memory location;
the second program storing the second copy in the second memory location;
the second program creating the second index to, the second copy;
the second program sending a request to synchronize the second copy with other copies of the primary data set to the coupling system interface, the request comprising sending the second index to the third program;
the coupling system interface program forwarding the request to synchronize the second copy to the coupling system;
the coupling system storing the second index to the second copy in the fourth memory location in response to the request;
the coupling system sending a second token to the coupling system interface, the second token comprising a location for the validity flag to be used for the second copy;
the coupling system interface program sending the second token to the second program; and
the second program storing the second token in the second memory.

24. The method of claim 22, further comprising:
the first program modifying the first copy;
the first program replacing the primary data set with the first copy;
the first program notifying the coupling system interface program that the primary data set has been modified;
the coupling system interface program notifying the coupling system that the primary data set has been modified; and
the coupling system setting the second validity flag to indicate that the second copy is invalid in response to the first program notifying the coupling system interface program that the primary data set has been modified.

25. The method of claim 22, further comprising:
the coupling system reading the second validity flag;
the second program replacing the second copy with the primary data set when the second validity flag is invalid; and
the second program setting the second validity flag to valid.

26. The method of claim 21, further comprising:
the second program notifying the coupling system interface program that the second program desires to access the second copy;
the coupling system interface program reading the second validity flag;
the coupling system interface program notifying the second program that the second copy is invalid when the second validity flag is invalid;
the second program replacing the second copy with the primary data set;
the coupling system interface program setting the second validity flag to indicate that the second copy is valid; and
the second program accessing the second copy when the second validity flag is valid.

27. The method of claim 18, wherein the coupling system interface program comprises a plurality of functions and an application programming interface, wherein each function is configured to perform at least one data synchronization task, and wherein the application programming interface is comprised of a plurality of function calls configured to provide external access to the functions, and wherein the function calls are accessible to a plurality of application programs.

28. The method of claim 1, wherein the primary data set is a data record.

29. The method of claim 1, wherein the primary data set is a data group.

30. The method of claim 1, wherein the primary data set is a data table.

31. A system comprising:
a plurality of computers (300,310) forming a cluster, wherein a computer (300,310) comprises a local memory and at least one validity flag (350,355), and wherein a copy of a data set (325) that is stored in the local memory is assigned at least one corresponding validity flag (350,355);
a coupling system (330) comprising a local memory, wherein the coupling system is connected to each of the computers in the cluster, and wherein the coupling system is configured to coordinate data sharing of the cluster; and
an external data storage (320) shared by the computers in the cluster;
wherein the local memories of the computers (300,310) or the coupling system (330) store program instructions, wherein the program instructions are executable by the computers or the coupling system to:
read a first copy of a primary data set (40,240,325) in a primary memory location (30,220,320);
store the first copy in a first memory location (80,225,365);
set (401,421,441,461) a first validity flag (350) to indicate that the first copy is valid;
read a second copy of the primary data set (40,240,325) in the primary memory location (30,220,320);
store the second copy in a second memory location (90,275,385);
set (403,423,444,465) a second validity flag (355) to indicate that the second copy is valid;
modify the first copy; **characterized in that** the program instructions are further executable to set (406, 426,449,471) the second validity flag (355) to indicate that the second copy is invalid in response to modifying the first copy.

32. The system of claim 31, wherein the program instructions are further executable to:
replace the primary data set with the modified first copy after the modifying of the first copy and before the setting of the second validity flag to indicate that the second copy is invalid;
replace the second copy with the primary data set after the setting of the second validity flag to indicate that the second copy is invalid; and
set the second validity flag to indicate that the second copy is valid after replacing the second copy with the primary data set.

33. The system of claim 32, wherein the program instructions further comprise a first program associated with the first copy and a second program associated with the second copy.

34. The system of claim 32, wherein in replacing the second copy with the primary data set, the program instructions are further executable to:
read the second validity flag in response to a program requesting access to the second copy; and
replace the second copy with the primary data set before granting the access request if the second validity flag indicates that the second copy is invalid.

35. The system of claim 32, wherein the program instructions are further executable to:
create a first index corresponding to the first copy, wherein the first index is stored in a fourth memory location, wherein the first index is created after reading the first copy from the primary data set; and
create a second index corresponding to the second copy, wherein the second index is stored in the fourth memory location, wherein the second index is created after reading the second copy from the primary data set.

36. The system of claim 35, wherein the program instructions are further executable to:
locate the second validity flag by using the second index before setting the second validity flag to indicate that the second copy is invalid.

37. The system of claim 36, wherein an index comprises:
a first field comprising a description of a copy of the data the index was created for; and
a second field comprising a memory location for a validity flag for the copy of the data set the index was created for.

38. The system of claim 37, wherein in locating the second validity flag, the program instructions are further executable to:
match the first index and the second index by comparing the first field of the first index and the first field of the second index; and
locate the second validity flag by referencing contents of the second field of the second index.

39. The system of claim 38, wherein the program instructions are further executable to:
read and store a plurality of copies of the primary data set at respective memory locations;
set a validity flag to indicate the copy is valid in response to reading and storing the copy; and
create an index to the copy in the fourth memory location in response to reading and storing the copy.

40. The system of claim 39, wherein the program instructions are further executable to:
set the validity flag of every copy other than the first copy to invalid after modifying the first copy.

41. The system of claim 37, wherein the program instructions further comprise a first program associated with the first copy and a second program associated with the second copy.

42. The system of claim 41, wherein the program instructions further comprise a third program, wherein the third program is configured to manage the synchronization of copies of data sets being used by the first and second programs.

43. The system of claim 42,
wherein the first program is executable to request that the third program synchronize the first copy with other copies of the data set;
wherein the third program is executable to create the first index corresponding to the first copy in the fourth memory location in response to the first program requesting that the third program synchronize the first copy with other copies of the data set;
wherein the second program is executable to request that the third program synchronize the second copy with other copies of the primary data set; and
wherein the third program is executable to create the second index corresponding to the second copy in the fourth memory location in response to the second progarn requesting that the third program synchronize the second copy with other copies of the data set.

44. The system of claim 42,
wherein the first program is executable to:
modify the first copy;
replace the primary data set with the first copy;
notify the third program that the primary data set has been modified; and
wherein the third program is executable to set the second validity flag to indicate that the second copy is invalid in response to the first program notifying the third program that the primary data set has been modified.

45. The system of claim 44,
wherein the second program is executable to notify the third program that the second program desires to access the second copy;
wherein the third program is executable to:
read the second validity flag; and
when the second validity flag is invalid notify the second program that the second copy is invalid,
replace the second copy with the primary data set,
second set the second validity flag to indicate that the second copy is valid; and
when the second validity flag is valid access the second copy.

46. The system of claim 44,
wherein the third program is excecutable to read the second validity flag;
wherein the second program is executable to:
replace the second copy with the primary data set when the second validity flag is invalid; and
set the second validity flag to valid.

47. The system of claim 31, wherein each computer further stores a coupling system interface program which is executable to communicate between the coupling system and a plurality of programs running on the computer.

48. The system of claim 47, wherein the coupling system interface program is executable to establish and maintain a communications link to the coupling system.

49. The system of claim 47, wherein the local memory of a first computer in the cluster comprises the first memory location, the local memory of a second computer in the cluster comprises the second memory location, the external data storage comprises the primary memory location, and the local memory of the coupling system comprises the fourth memory location.

50. The system of claim 49, wherein the program instructions are further executable to create a copy of the primary data set in the local memory of a plurality of computers in the cluster, wherein in creating the copy, the program instructions are further executable to:
create an index corresponding to the copy of the primary data set in the local memory of the coupling system;
assign a validity flag to the copy of the primary data set; and
set the validity flag to indicate that the copy of the primary data set is valid.

51. The system of claim 50, wherein the program instructions are further executable to set the validity flag of every copy other than the first copy to invalid after modifying the first copy.

52. The system of claim 50, wherein the first computer further includes a first program associated with the first copy, and the second computer further includes a second program associated with the second copy.

53. The system of claim 52,
wherein the first program is executable to:
read the first copy of the data set from the primary data set in the primary memory location;
store the first copy in the first memory location;
create the first index to the first copy; and
send a request to synchronize the first copy with other copies of the data set to the coupling system interface, wherein the first program is executable to send the first index to a third program;
wherein the coupling system interface program is executable to forward the request to synchronize the first copy to the coupling system;
wherein the coupling system is executable to:
store the first index to the first copy in the fourth memory location in response to the request; and
send a first token to the coupling system interface, the first token comprising a location for the validity flag to be used for the first copy;
wherein the coupling system interface program is executable to send the first token to the first program;
wherein the first program is executable to store the first token in the first memory;
wherein the second program is executable to:
read the second copy of the primary data set from the primary data set in the primary memory location;
store the second copy in the second memory location;
create the second index to the second copy; and
send a request to synchronize the second copy with other copies of the primary data set to the coupling system interface, wherein the second program is executable to send the second index to the third program;
wherein the coupling system interface program is executable to forward the request to synchronize the second copy to the coupling system;
wherein the coupling system is executable to:
store the second index to the second copy in the fourth memory location in response to the request; and
send a second token to the coupling system interface, the second token comprising a location for the validity flag to be used for the second copy;
wherein the coupling system interface program is executable to send the second token to the second program; and
wherein the second program is executable to store the second token in the second memory.

54. The system of claim 52,
wherein the first program is executable to:
modify the first copy;
replace the primary data set with the first copy; and
notify the coupling system interface program that the primary data set has been modified;
wherein the coupling system interface program is executable to notify the coupling system that the primary data set has been modified; and
wherein the coupling system is executable to set the second validity flag to indicate that the second copy is invalid in response to the first program notifying the coupling system interface program that the primary data set has been modified.

55. The system of claim 52,
wherein the coupling system is executable to read the second validity flag;
wherein the second program is executable to:
replace the second copy with the primary data set when the second validity flag is invalid; and
set the second validity flag to valid.

56. The system of claim 51,
wherein the second program is executable to notify the coupling system interface program that the second program desires to access the second copy;
wherein the coupling system interface program is executable to:
read the second validity flag; and
notify the second program that the second copy is invalid when the second validity flag is invalid;
wherein the second program is executable to replace the second copy with the primary data set;
wherein the coupling system interface program is executable to set the second validity flag to indicate that the second copy is valid; and
wherein the second program is executable to access the second copy when the second validity flag is valid.

57. The system of claim 48, wherein the coupling system interface program comprises a plurality of functions and an application programming interface, wherein each function is configured to perform at least one data synchronization task, and wherein the application programming interface is comprised of a plurality of function calls configured to provide external access to the functions, and wherein the function calls are accessible to a plurality of programs.

58. The system of claim 31, wherein the primary data set is a data record.

59. The system of claim 31, wherein the primary data set is a data group.

60. The system of claim 31, wherein the primary data set is a data table.

61. A carrier medium comprising program instructions, wherein the program instructions are executable by a machine (300, 310, 330) to implement the steps defined in claim 1.

62. The carrier medium of claim 61, wherein the program instructions are further executable by the machine to implement:
replacing the primary data set with the modified first copy after the modifying of the first copy and before the setting of the second validity flag to indicate that the second copy is invalid;
replacing the second copy with the primary data set after the setting of the second validity flag to indicate that the second copy is invalid; and
setting the second validity flag to indicate that the second copy is valid after replacing the second copy with the primary data set.

63. The carrier medium of claim 62, wherein a first program is associated with the first copy, and a second program is associated with the second copy.

64. The carrier medium of claim 61, wherein the program instructions are further executable by the machine to implement:
reading the second validity flag in response to a program requesting access to the second copy; and
replacing the second copy with the primary data set before granting the access request if the second validity flag indicates that the second copy is invalid.

65. The carrier medium of claim 62, wherein the program instructions are further executable by the machine to implement:
creating a first index corresponding to the first copy, wherein the first index is stored in a fourth memory location, wherein the first index is created after reading the first copy from the primary data set; and
creating a second index corresponding to the second copy, wherein the second index is stored in the fourth memory location, wherein the second index is created after reading the second copy from the primary data set.

66. The carrier medium of claim 65, wherein the program instructions are further executable by the machine to implement locating the second validity flag by using the second index before setting the second validity flag to indicate that the second copy is invalid.

67. The carrier medium of claim 66, wherein an index comprises:
a first field comprising a description of a copy of the data for which the index was created; and
a second field comprising a memory location for a validity flag for the copy of the data set for which the index was created.

68. The carrier medium of claim 67, wherein the program instructions are further executable by the machine to implement:
matching the first index and the second index by comparing the first field of the first index and the first field of the second index; and
locating the second validity flag by referencing contents of the second field of the second index.

69. The carrier medium of claim 68, wherein the program instructions are further executable to implement:
reading and storing a plurality of copies of the primary data set at respective memory locations, wherein in creating a copy of the primary data set, the program instructions are further executable by the machine to implement:
setting a validity flag to indicate the copy is valid in response to reading and storing the copy; and
creating an index to the copy in the fourth memory location in response to reading and storing the copy.

70. The carrier medium of claim 69, wherein the program instructions are further executable by the machine to implement:
setting the validity flag of every copy other than the first copy to invalid after modifying the first copy.

71. The carrier medium of claim 68, wherein a first program is associated with the first copy and a second program is associated with the second copy.

72. The carrier medium of claim 71, wherein the program instructions are further executable by a machine to implement:
the first program requesting that a third program synchronize the first copy with other copies of the data set;
the third program creating the first index corresponding to the first copy in the fourth memory location in response to the first program requesting that the third program synchronize the first copy with other copies of the data set;
the second program requesting that the third program synchronize the second copy with other copies of the data set; and
the third program creating the second index corresponding to the second copy in the fourth memory location in response to the second program requesting that the third program synchronize the second copy with other copies of the data set

73. The carrier medium of claim 71, wherein the program instructions are further executable by the machine to implement:
the first program modifying the first copy;
the first program replacing the primary data set with the first copy;
the first program notifying a third program that the primary data set has been modified; and
the third program setting the second validity flag to indicate that the second copy is invalid in response to the first program notifying the third program that the primary data set has been modified, wherein the third program is configured to manage the synchronization of copies of data sets.

74. The carrier medium of claim 73, wherein the program instructions are further executable by the machine to implement:
the second program notifying the third program that the second program desires to access the second copy;
the third program reading the second validity flag;
when the second validity flag is invalid the third program notifying the second program that the second copy is invalid;
the second program reading the primary data set and replacing the second copy with the primary data set;
the second program setting the second validity flag to indicate that the second copy is valid; and
when the second validity flag is valid the second program accessing the second copy.

75. The carrier medium of claim 73, wherein the program instructions are further executable by the machine to implement:
the third program reading the second validity flag;
the second program reading the primary data set and replacing the second copy with the primary data set when the second validity flag is invalid; and
the second program setting the second validity flag to valid.

76. The carrier medium of claim 61, wherein the program instructions further comprise a plurality of functions and an application programming interface, wherein each function is configured to perform at least one data synchronization task, and wherein the application programming interface is comprised of a plurality of function calls configured to provide external access to the functions, and wherein the function calls are accessible to a plurality of application programs.

77. The carrier medium of claim 61, wherein the primary data set is a data record.

78. The carrier medium of claim 61, wherein the primary data set is a data group.

79. The carrier medium of claim 61, wherein the primary data set is a data table.

80. The carrier medium of claim 61, wherein the carrier medium is a memory medium.

81. The method of claim 1, wherein the primary data set relates to financial transaction data.

82. The system of claim 31, wherein the primary data set relates to financial transaction data.

83. The carrier medium of claim 61, wherein the primary data set relates to financial transaction data.

## Patentansprüche

1. Verfahren, welches umfasst:
Auslesen einer ersten Kopie eines in einer Primärspeicherstelle (30, 220, 320) befindlichen Primärdatensatzes (40, 240, 325);
Speichern der ersten Kopie in einer ersten Speicherstelle (80, 255, 365);
Setzen (401, 421, 441, 461) eines ersten Gültigkeits-Flags, um anzuzeigen, dass die erste Kopie gültig ist;
Auslesen einer zweiten Kopie des in der Primärspeicherstelle (30, 220, 320) befindlichen Primärdatensatzes;
Speichern der zweiten Kopie in einer zweiten Speicherstelle (90, 275, 375);
Setzen (403, 423, 444, 465) eines zweiten Gültigkeits-Flags (355), um anzuzeigen, dass die zweite Kopie gültig ist;
Modifizieren (404, 424, 446, 468) der ersten Kopie, **dadurch gekennzeichnet, dass** das Verfahren weiter umfasst:
Setzen (406, 426, 449, 471) des zweiten Gültigkeits-Flags, um anzuzeigen, dass die zweite Kopie ungültig ist, als Reaktion auf das Modifizieren der ersten Kopie.

2. Verfahren nach Anspruch 1, welches weiter umfasst:
Ersetzen des Primärdatensatzes durch die modifizierte erste Kopie, und zwar nach dem Modifizieren der ersten Kopie und vor dem Setzen des zweiten Gültigkeits-Flags, um anzuzeigen, dass die zweite Kopie ungültig ist;
Ersetzen der zweiten Kopie durch den Primärdatensatz, und zwar nach dem Setzen des zweiten Gültigkeits-Flags, um anzuzeigen, dass die zweite Kopie ungültig ist; und
Setzen des zweiten Gültigkeits-Flags, um anzuzeigen, dass die zweite Kopie gültig ist, und zwar nach dem Ersetzen der zweiten Kopie durch den Primärdatensatz.

3. Verfahren nach Anspruch 2, bei welchem ein erstes Programm der ersten Kopie zugehörig ist und ein zweites Programm der zweiten Kopie zugehörig ist.

4. Verfahren nach Anspruch 1, bei welchem das Ersetzen der zweiten Kopie durch den Primärdatensatz weiter umfasst:
Auslesen des zweiten Gültigkeits-Flags als Reaktion auf ein Programm, das Zugriff auf die zweite Kopie fordert; und
Ersetzen der zweiten Kopie durch den Primärdatensatz, bevor der Zugriffforderung stattgegeben wird, falls das zweite Gültigkeits-Flag anzeigt, dass die zweite Kopie ungültig ist.

5. Verfahren nach Anspruch 2, welches weiter umfasst:
Erzeugen eines der ersten Kopie zugehörigen ersten Index, wobei der erste Index in einer vierten Speicherstelle gespeichert wird und wobei der erste Index erzeugt wird, nachdem das Auslesen der ersten Kopie aus dem Primärdatensatz erfolgt ist; und
Erzeugen eines der zweiten Kopie zugehörigen zweiten Index, wobei der zweite Index in einer vierten Speicherstelle gespeichert wird und wobei der zweite Index erzeugt wird, nachdem das Auslesen der zweiten Kopie aus dem Primärdatensatz erfolgt ist.

6. Verfahren nach Anspruch 5, welches umfasst:
Orten des zweiten Gültigkeits-Flags durch Verwenden des zweiten Index, und zwar vor dem Setzen des zweiten Gültigkeits-Flags, um anzuzeigen, dass die zweite Kopie ungültig ist.

7. Verfahren nach Anspruch 6, bei welchem ein Index aufweist:
ein erstes Feld, dass eine Beschreibung einer Kopie der Daten enthält, für die der Index erzeugt wurde; und
ein zweites Feld, welches eine Speicherstelle für ein Gültigkeits-Flag für die Kopie des Datensatzes enthält, für die der Index erzeugt wurde.

8. Verfahren nach Anspruch 7, welches weiter umfasst:
Abgleichen des ersten Index und des zweiten Index durch Vergleichen des ersten Feldes des ersten Index und des ersten Feldes des zweiten Index; und
wobei das Orten des zweiten Gültigkeits-Flags weiter das Orten des zweiten Gültigkeits-Flags unter Bezugnahme auf die Inhalte des zweiten Feldes des zweiten Index beinhaltet.

9. Verfahren nach Anspruch 8, welches weiter umfasst:
Auslesen und Speichern einer Mehrzahl von Kopien des Primärdatensatzes an jeweiligen Speicherstellen;
Setzen eines Gültigkeits-Flags, um anzuzeigen, dass die Kopie gültig ist, als Reaktion auf das Auslesen und Speichern der Kopie; und
Erzeugen eines Index für die Kopie in der vierten Speicherstelle, als Reaktion auf das Auslesen und Speichern der Kopie.

10. Verfahren nach Anspruch 9, welches weiter umfasst:
Setzen des Gültigkeits-Flags für jede Kopie außer der ersten Kopie auf ungültig, und zwar nach dem Modifizieren der ersten Kopie.

11. Verfahren nach Anspruch 8, bei welchem ein erstes Programm der ersten Kopie zugehörig ist und ein zweites Programm der zweiten Kopie zugehörig ist.

12. Verfahren nach Anspruch 11, welches weiter umfasst:
das erste Programm fordert dazu auf, dass ein drittes Programm die erste Kopie mit weiteren Kopien des Primärdatensatzes synchronisiert;
das dritte Programm erzeugt den ersten Index, der zu der in der vierten Speicherstelle befindlichen ersten Kopie gehört, und zwar als Reaktion darauf, dass das erste Programm dazu auffordert, dass das dritte Programm die erste Kopie mit weiteren Kopien des Primärdatensatzes synchronisiert;
das zweite Programm fordert dazu auf, dass das dritte Programm die zweite Kopie mit weiteren Kopien des Primärdatensatzes synchronisiert; und
das dritte Programm erzeugt den zweiten Index, der zu der in der vierten Speicherstelle befindlichen zweiten Kopie gehört, und zwar als Reaktion darauf, dass das zweite Programm dazu auffordert, dass das dritte Programm die zweite Kopie mit weiteren Kopien des Primärdatensatzes synchronisiert.

13. Verfahren nach Anspruch 11, welches weiter umfasst:
das erste Programm modifiziert die erste Kopie;
das erste Programm ersetzt den Primärdatensatz durch die erste Kopie;
das erste Programm setzt ein drittes Programm davon in Kenntnis, dass der Primärdatensatz modifiziert wurde; und
das dritte Programm setzt das zweite Gültigkeits-Flag, um anzuzeigen, dass die zweite Kopie ungültig ist, und zwar als Reaktion darauf, dass das erste Programm das dritte Programm davon in Kenntnis gesetzt hat, dass der Primärdatensatz modifiziert wurde, wobei das dritte Programm konfiguriert ist, um das Synchronisieren der Kopien der Datensätze zu verwalten.

14. Verfahren nach Anspruch 13, welches weiter umfasst:
das zweite Programm setzt das dritte Programm davon in Kenntnis, dass das zweite Programm auf die zweite Kopie zugreifen möchte;
das dritte Programm liest das zweite Gültigkeits-Flag aus;
wenn das zweite Gültigkeits-Flag ungültig ist, setzt das dritte Programm das zweite Programm davon in Kenntnis, dass die zweite Kopie ungültig ist;
das zweite Programm liest den Primärdatensatz aus und ersetzt die zweite Kopie durch den Primärdatensatz;
das zweite Programm setzt das zweite Gültigkeits-Flag, um anzuzeigen, dass die zweite Kopie gültig ist; und
wenn das zweite Gültigkeits-Flag gültig ist, greift das zweite Programm auf die zweite Kopie zu.

15. Verfahren nach Anspruch 13, welches weiter umfasst:
das dritte Programm liest das zweite Gültigkeits-Flags aus;
das zweite Programm liest den Primärdatensatz aus und ersetzt die zweite Kopie durch den Primärdatensatz, wenn das zweite Gültigkeits-Flag ungültig ist; und
das zweite Programm setzt das zweite Gültigkeits-Flag auf gültig.

16. Verfahren nach Anspruch 11, bei welchem sich das erste Programm und das zweite Programm auf einem Computersystem ausführen lassen, wobei es sich bei dem Computersystem um einen Cluster handelt, und der Cluster aufweist:
eine Mehrzahl von Computern, wobei ein Computer einen lokalen Speicher und mindestens ein Gültigkeits-Flag aufweist und wobei einer Kopie eines Datensatzes, die im lokalen Speicher gespeichert ist, mindestens ein zugehöriges Gültigkeits-Flag zugewiesen ist;
ein Kopplungssystem, welches einen lokalen Speicher aufweist, wobei das Kopplungssystem mit jedem der Computer des Clusters verbunden ist und das Kopplungssystem konfiguriert ist, um die gemeinsam genutzten Daten des Clusters zu koordinieren; und
einen externen Datenspeicher, den sich die Computer des Clusters gemeinsam teilen.

17. Verfahren nach Anspruch 16, bei welchem jeder Computer weiter ein Kopplungssystem-Schnittstellenprogramm aufweist, das konfiguriert ist, um eine Kommunikation zwischen dem Kopplungssystem und einer Mehrzahl von auf dem Computer laufenden Programmen zu ermöglichen.

18. Verfahren nach Anspruch 17, bei welchem das Kopplungssystem-Schnittstellenprogramm eine Kommunikationsverbindung zum Kopplungssystem herstellt und aufrechterhält.

19. Verfahren nach Anspruch 17, bei welchem der lokale Speicher eines ersten Computers des Clusters die erste Speicherstelle enthält, der lokale Speicher eines zweiten Computers des Clusters die zweite Speicherstelle enthält, der externe Datenspeicher die Primärspeicherstelle enthält und der lokale Speicher des Kopplungssystems die vierte Speicherstelle enthält.

20. Verfahren nach Anspruch 19, welches weiter umfasst, dass eine Kopie des Primärdatensatzes im lokalen Speicher einer Mehrzahl von Computern des Clusters erzeugt wird, wobei die Erzeugung der Kopie beinhaltet:
es wird ein Index erzeugt, welcher der Kopie des Primärdatensatzes im lokalen Speicher des Kopplungssystems zugehörig ist;
der Kopie des Primärdatensatzes wird ein Gültigkeits-Flag zugewiesen; und
das Gültigkeits-Flag wird gesetzt, um anzuzeigen, dass die Kopie des Primärdatensatzes gültig ist.

21. Verfahren nach Anspruch 20, welches weiter aufweist:
das Gültigkeits-Flag einer jeden Kopie außer der ersten Kopie wird auf ungültig gesetzt, nachdem die erste Kopie modifiziert wurde.

22. Verfahren nach Anspruch 19, bei welchem der erste Computer weiter ein erstes Programm aufweist, das der ersten Kopie zugehörig ist, und der zweite Computer weiter ein zweites Programm aufweist, das der zweiten Kopie zugehörig ist.

23. Verfahren nach Anspruch 22, welches weiter aufweist:
das erste Programm liest die erste Kopie des Primärdatensatzes aus dem in der Primärspeicherstelle befindlichen Primärdatensatz aus;
das erste Programm speichert die erste Kopie in der ersten Speicherstelle;
das erste Programm erzeugt den ersten Index für die erste Kopie;
das erste Programm sendet eine Aufforderung an die Kopplungssystemschnittstelle, die erste Kopie mit den weiteren Kopien des Primärdatensatzes zu synchronisieren, wobei die Aufforderung das Senden des ersten Index an ein drittes Programm beinhaltet;
das Kopplungssystem-Schnittstellenprogramm leitet die Aufforderung an das Kopplungssystem weiter, die erste Kopie zu synchronisieren;
das Kopplungssystem speichert den ersten Index für die erste Kopie in der vierten Speicherstelle, als Reaktion auf die Aufforderung;
das Kopplungssystem sendet ein erstes Token an die Kopplungssystemschnittstelle, wobei das erste Token eine Stelle (=Ort) für das für die erste Kopie zu verwendende Gültigkeits-Flag beinhaltet;
das Kopplungssystem-Schnittstellenprogramm sendet das erste Token an das erste Programm;
das erste Programm speichert das erste Token im ersten Speicher;
das zweite Programm liest die zweite Kopie des Primärdatensatzes aus dem in der Primärspeicherstelle befindlichen Primärdatensatz aus;
das zweite Programm speichert die zweite Kopie in der zweiten Speicherstelle;
das zweite Programm erzeugt den zweiten Index für die zweite Kopie;
das zweite Programm sendet eine Aufforderung an die Kopplungssystemschnittstelle, die zweite Kopie mit weiteren Kopien des Primärdatensatzes zu synchronisieren, wobei die Aufforderung das Senden des zweiten Index an das dritte Programm beinhaltet;
das Kopplungssystem-Schnittstellenprogramm leitet die Aufforderung zum Synchronisieren der zweiten Kopie an das Kopplungssystem weiter;
das Kopplungssystem speichert den zweiten Index für die zweite Kopie in der vierten Speicherstelle, als Reaktion auf die Aufforderung;
das Kopplungssystem sendet ein zweites Token an die Kopplungssystemschnittstelle, wobei das zweite Token eine Stelle (Ort) für das für die zweite Kopie zu verwendende Gültigkeits-Flag beinhaltet;
das Kopplungssystem-Schnittstellenprogramm sendet das zweite Token an das zweite Programm; und
das zweite Programm speichert das zweite Token im zweiten Speicher.

24. Verfahren nach Anspruch 22, welches weiter umfasst:
das erste Programm modifiziert die erste Kopie;
das erste Programm ersetzt den Primärdatensatz durch die erste Kopie;
das erste Programm setzt das Kopplungssystem-Schnittstellenprogramm davon in Kenntnis, dass der Primärdatensatz modifiziert wurde;
das Kopplungssystem-Schnittstellenprogramm setzt das Kopplungssystem
davon in Kenntnis, dass der Primärdatensatz modifiziert wurde; und
das Kopplungssystem setzt das zweite Gültigkeits-Flag, um anzuzeigen, dass die zweite Kopie ungültig ist, als Reaktion darauf, dass das erste Programm das Kopplungssystem-Schnittstellenprogramm davon in Kenntnis setzt, dass der Primärdatensatz modifiziert wurde.

25. Verfahren nach Anspruch 22, welches weiter umfasst:
das Kopplungssystem liest das zweite Gültigkeits-Flag aus;
das zweite Programm ersetzt die zweite Kopie durch den Primärdatensatz, wenn das zweite Gültigkeits-Flag ungültig ist; und
das zweite Programm setzt das zweite Gültigkeits-Flag auf gültig.

26. Verfahren nach Anspruch 21, welches weiter umfasst:
das zweite Programm setzt das Kopplungssystem-Schnittstellenprogramm davon in Kenntnis, dass das zweite Programm auf die zweite Kopie zugreifen möchte;
das Kopplungssystem-Schnittstellenprogramm liest das zweite Gültigkeits-Flag aus;
das Kopplungssystem-Schnittstellenprogramm setzt das zweite Programm davon in Kenntnis, dass die zweite Kopie ungültig ist, wenn das zweite Gültigkeits-Flag ungültig ist;
das zweite Programm ersetzt die zweite Kopie durch den Primärdatensatz;
das Kopplungssystem-Schnittstellenprogramm setzt das zweite Gültigkeits-Flag, um anzuzeigen, dass die zweite Kopie gültig ist; und
das zweite Progamm greift auf die zweite Kopie zu, wenn das zweite Gültigkeits-Flag gültig ist.

27. Verfahren nach Anspruch 18, bei welchem das Kopplungssystem-Schnittstellenprogramm eine Mehrzahl von Funktionen und eine Anwenderprogramm-Schnittstelle aufweist, wobei jede Funktion konfiguriert ist, um mindestens eine Datensynchronisierungsaufgabe durchzuführen, und die Anwenderprogramm-Schnittstelle aus einer Mehrzahl von Funktionsaufrufen besteht, die konfiguriert sind, um einen externen Zugriff auf die Funktionen bereitzustellen, und wobei auf die Funktionsaufrufe von einer Mehrzahl von Anwenderprogrammen zugegriffen werden kann.

28. Verfahren nach Anspruch 1, wobei der Primärdatensatz eine Entität (data record) ist.

29. Verfahren nach Anspruch 1, bei welchem der Primärdatensatz eine Datengruppe ist.

30. Verfahren nach Anspruch 1, bei welchem der Primärdatensatz eine Datentabelle ist.

31. System, welches aufweist:
eine Mehrzahl von Computern (300, 310), welche einen Cluster bilden, wobei ein Computer (300, 310) einen lokalen Speicher und mindestens ein Gültigkeits-Flag (350, 355) aufweist und wobei einer Kopie eines Datensatzes (375), die im lokalen Speicher gespeichert ist, mindestens ein zugehöriges Gültigkeits-Flag (350, 355) zugewiesen ist;
ein Kopplungssystem (330), welches einen lokalen Speicher aufweist, wobei das Kopplungssystem mit jedem der Computer des Clusters verbunden ist, und wobei das Kopplungssystem konfiguriert ist, um eine gemeinsame Nutzung von Daten im Cluster zu koordinieren; und
einen extemen Datenspeicher (320), der von den Computern des Clusters gemeinsam benutzt wird;
wobei die lokalen Speicher der Computer (300, 310) des Kopplungssystems (330) Programmanweisungen speichern; und
wobei sich die Programmanweisungen durch die Computer oder das Kopplungssystem ausführen lassen, um:
eine erste Kopie eines in einer Primärspeicherstelle (30, 220, 320) befindlichen Primärdatensatzes (40, 240, 325) auszulesen;
die erste Kopie in einer ersten Speicherstelle (80, 255, 365) zu speichern;
ein Setzen (401, 421, 441, 461) eines ersten Gültigkeits-Flags (350) durchzuführen, um anzuzeigen, dass die erste Kopie gültig ist;
eine zweite Kopie des in der Primärspeicherstelle (30, 220, 320) befindlichen Primärdatensatzes (40, 240, 325) auszulesen;
die zweite Kopie in einer zweiten Speicherstelle (90, 275, 375) zu speichern;
ein Setzen (403, 423, 444, 465) eines zweiten Gültigkeits-Flags (355) durchzuführen, um anzuzeigen, dass die zweite Kopie gültig ist;
die erste Kopie zu modifizieren, **dadurch gekennzeichnet, dass** sich die Programmanweisungen weiter ausführen lassen, um:
ein Setzen (406, 426, 449, 471) des zweiten Gültigkeits-Flags (355) durchzuführen, um anzuzeigen, dass die zweite Kopie ungültig ist, als Reaktion auf das Modifizieren der ersten Kopie.

32. System nach Anspruch 31, bei welchem sich die Programmanweisungen weiter ausführen lassen, um:
den Primärdatensatz durch die modifizierte erste Kopie zu ersetzen, und zwar nach dem Modifizieren der ersten Kopie und vor dem Setzen des zweiten Gültigkeits-Flags, um anzuzeigen, dass die zweite Kopie ungültig ist;
die zweite Kopie durch den Primärdatensatz zu ersetzen, und zwar nach dem Setzen des zweiten Gültigkeits-Flags, um anzuzeigen, dass die zweite Kopie ungültig ist; und
das zweite Gültigkeits-Flag zu setzen, um anzuzeigen, dass die zweite Kopie gültig ist, und zwar nach dem das Ersetzen der zweiten Kopie durch den Primärdatensatz erfolgt ist.

33. System nach Anspruch 32, bei welchem die Programmanweisungen weiter ein erstes Programm beinhalten, das der ersten Kopie zugehörig ist, und ein zweites Programm, das der zweiten Kopie zugehörig ist.

34. System nach Anspruch 32, bei welchem sich beim Ersetzen der zweiten Kopie durch den Primärdatensatz die Programmanweisungen weiter ausführen lassen, um:
ein Auslesen des zweiten Gültigkeits-Flags durchzuführen, und zwar als Reaktion auf ein Programm, das Zugriff auf die zweite Kopie fordert; und
die zweiten Kopie durch den Primärdatensatz zu ersetzen, bevor der Zugriffforderung stattgegeben wird, falls das zweite Gültigkeits-Flag anzeigt, dass die zweite Kopie ungültig ist.

35. System nach Anspruch 32, bei welchem sich die Programmanweisungen weiter ausführen lassen, um:
einen der ersten Kopie zugehörigen ersten Index zu erzeugen, wobei der erste Index in einer vierten Speicherstelle gespeichert wird und wobei der erste Index erzeugt wird, nachdem das Auslesen der ersten Kopie aus dem Primärdatensatz erfolgt ist; und
einen der zweiten Kopie zugehörigen zweiten Index zu erzeugen, wobei der zweite Index in einer vierten Speicherstelle gespeichert wird und wobei der zweite Index erzeugt wird, nachdem das Auslesen der zweiten Kopie aus dem Primärdatensatz erfolgt ist.

36. System nach Anspruch 35, bei welchem sich die Programmanweisungen weiter ausführen lassen, um:
das zweite Gültigkeits-Flags durch Verwenden des zweiten Index zu orten, und zwar vor dem Setzen des zweiten Gültigkeits-Flags, um anzuzeigen, dass . die zweite Kopie ungültig ist.

37. System nach Anspruch 36, bei welchem ein Index aufweist:
ein erstes Feld, dass eine Beschreibung einer Kopie der Daten enthält, für die der Index erzeugt wurde; und
ein zweites Feld, welches eine Speicherstelle für ein Gültigkeits-Flag für die Kopie des Datensatzes enthält, für die der Index erzeugt wurde.

38. System nach Anspruch 37, bei welchem sich beim Orten des zweiten Gültigkeits-Flags die Programmanweisungen weiter ausführen lassen, um:
den ersten Index und den zweiten Index abzugleichen, und zwar durch Vergleichen des ersten Feldes des ersten Index und des ersten Feldes des zweiten Index; und
das zweite Gültigkeits-Flag unter Bezugnahme auf die Inhalte des zweiten Feldes des zweiten Index zu orten.

39. System nach Anspruch 38, bei welchem sich die Programmanweisungen weiter ausführen lassen, um:
ein Auslesen und Speichern einer Mehrzahl von Kopien des Primärdatensatzes an jeweiligen Speicherstellen durchzuführen;
ein Setzen eines Gültigkeits-Flags durchzuführen, um anzuzeigen, dass die Kopie gültig ist, und zwar als Reaktion auf das Auslesen und Speichern der Kopie; und
einen Index für die Kopie in der vierten Speicherstelle zu erzeugen, und zwar als Reaktion auf das Auslesen und Speichern der Kopie.

40. System nach Anspruch 39, bei welchem sich die Programmanweisungen weiter ausführen lassen, um:
ein Setzen des Gültigkeits-Flags für jede Kopie außer der ersten Kopie auf ungültig durchzuführen, und zwar nach dem Modifizieren der ersten Kopie.

41. System nach Anspruch 37, bei welchem die Programmanweisungen weiter ein erstes Programm, das der ersten Kopie zugehörig ist, und ein zweites Programm beinhalten, das der zweiten Kopie zugehörig ist.

42. System nach Anspruch 41, bei welchem die Programmanweisungen weiter ein drittes Programm beinhalten, wobei das dritte Programm konfiguriert ist, um das Synchronisieren der von den ersten und zweiten Programmen verwendeten Kopien der Datensätze zu verwalten.

43. System nach Anspruch 42, bei welchem
sich das erste Programm ausführen lässt, um dazu aufzufordern, dass ein drittes Programm die erste Kopie mit weiteren Kopien des Datensatzes synchronisiert;
sich das dritte Programm ausführen lässt, um den ersten Index zu erzeugen, der zu der in der vierten Speicherstelle befindlichen ersten Kopie gehört, und zwar als Reaktion darauf, dass das erste Programm dazu auffordert, dass das dritte Programm die erste Kopie mit weiteren Kopien des Datensatzes synchronisiert;
sich das zweite Programm ausführen lässt, um dazu aufzufordern, dass das dritte Programm die zweite Kopie mit weiteren Kopien des Primärdatensatzes synchronisiert; und
sich das dritte Programm ausführen lässt, um den zweiten Index zu erzeugen, der zu der in der vierten Speicherstelle befindlichen zweiten Kopie gehört, und zwar als Reaktion darauf, dass das zweite Programm dazu auffordert,
dass das dritte Programm die zweite Kopie mit weiteren Kopien des Datensatzes synchronisiert.

44. System nach Anspruch 42,
bei welchem sich das erste Programm ausführen lässt, um:
die erste Kopie zu modifizieren;
den Primärdatensatz durch die erste Kopie zu ersetzen; und
das dritte Programm davon in Kenntnis zu setzen, dass der Primärdatensatz modifiziert wurde;
und bei welchem sich das dritte Programm ausführen lässt, um das zweite Gültigkeits-Flag zu setzen, um anzuzeigen, dass die zweite Kopie ungültig ist, und zwar als Reaktion darauf, dass das erste Programm das dritte Programm davon in Kenntnis setzt, dass der Primärdatensatz modifiziert wurde.

45. System nach Anspruch 44,
bei welchem sich das zweite Programm ausführen lässt, um das dritte Programm davon in Kenntnis zu setzen, dass das zweite Programm auf die zweite Kopie zugreifen möchte; und
bei welchem sich das dritte Programm ausführen lässt, um
das zweite Gültigkeits-Flag auszulesen;
wenn das zweite Gültigkeits-Flag ungültig ist, das zweite Programm zu benachrichtigen, dass die zweite Kopie ungültig ist;
die zweite Kopie durch den Primärdatensatz zu ersetzen;
das zweite Gültigkeits-Flag zu setzen, um anzuzeigen, dass die zweite Kopie gültig ist; und
wenn das zweite Gültigkeits-Flag gültig ist, auf die zweite Kopie zuzugreifen.

46. System nach Anspruch 44,
bei welchem sich das dritte Programm ausführen lässt, um das zweite Gültigkeits-Flag auszulesen; und
sich das zweite Programm ausführen lässt, um
die zweite Kopie durch den Primärdatensatz zu ersetzen, wenn das zweite Gültigkeits-Flag ungültig ist; und
das zweite Gültigkeits-Flag auf gültig zu setzen.

47. System nach Anspruch 31, bei welchem jeder Computer weiter ein Kopplungssystem-Schnittstellenprogramm speichert, das sich betreiben lässt, um eine Kommunikation zwischen dem Kopplungssystem und einer Mehrzahl von auf dem Computer laufenden Programmen zu ermöglichen.

48. System nach Anspruch 47, bei welchem sich das Kopplungssystem-Schnittstellenprogramm ausführen lässt, um eine Kommunikationsverbindung zum Kopplungssystem herzustellen und aufrechtzuerhalten.

49. System nach Anspruch 47, bei welchem der lokale Speicher eines ersten Computers des Clusters die erste Speicherstelle enthält, der lokale Speicher eines zweiten Computers des Clusters die zweite Speicherstelle enthält, der externe Datenspeicher die Primärspeicherstelle enthält und der lokale Speicher des Kopplungssystems die vierte Speicherstelle enthält.

50. System nach Anspruch 49, bei welchem sich die Programmanweisungen weiter ausführen lassen, um:
eine Kopie des Primärdatensatzes im lokalen Speicher einer Mehrzahl von Computern des Clusters zu erzeugen, wobei beim Erzeugen der Kopie sich die Programmanweisungen weiter ausführen lassen, um:
einen Index zu erzeugen, welcher der Kopie des Primärdatensatzes im lokalen Speicher des Kopplungssystems zugehörig ist;
der Kopie des Primärdatensatzes ein Gültigkeits-Flag zuzuweisen; und das Gültigkeits-Flag zu setzen, um anzuzeigen, dass die Kopie des Primärdatensatzes gültig ist.

51. System nach Anspruch 50, bei welchem sich die Programmanweisungen weiter ausführen lassen, um das Gültigkeits-Flag einer jeden Kopie außer der ersten Kopie auf ungültig zu setzen, nachdem die erste Kopie modifiziert wurde.

52. System nach Anspruch 50, bei welchem der erste Computer weiter ein erstes Programm beinhaltet, das der ersten Kopie zugehörig ist, und der zweite Computer weiter ein zweites Programm beinhaltet, das der zweiten Kopie zugehörig ist.

53. System nach Anspruch 52,
bei welchem sich das erste Programm ausführen lässt, um:
die erste Kopie des Datensatzes aus dem in der Primärspeicherstelle befindlichen Primärdatensatz auszulesen;
die erste Kopie in der ersten Speicherstelle zu speichern;
den ersten Index für die erste Kopie zu erzeugen; und
eine Aufforderung an die Kopplungssystem-Schnittstelle zu senden, die erste Kopie mit den weiteren Kopien des Datensatzes zu synchronisieren, wobei sich das erste Programm ausführen lässt, um den ersten Index an ein drittes Programm zu senden;
bei welchem sich das Kopplungssystem-Schnittstellenprogramm betreiben lässt, um die Aufforderung zum Synchronisieren der ersten Kopie an das Kopplungssystem weiterzuleiten;
bei welchem sich das Kopplungssystem betreiben lässt, um
den ersten Index für die erste Kopie in der vierten Speicherstelle zu speichern, und zwar als Reaktion auf die Aufforderung; und
ein erstes Token an die Kopplungssystemschnittstelle zu senden, wobei das erste Token eine Stelle (=Ort) für das für die erste Kopie zu verwendende Gültigkeits-Flag beinhaltet; und
bei welchem sich das Kopplungssystem-Schnittstellenprogramm ausführen lässt, um das erste Token an das erste Programm zu senden;
bei welchem sich das erste Programm ausführen lässt, um das erste Token im ersten Speicher zu speichern;
bei welchem sich das zweite Programm ausführen lässt, um:
die zweite Kopie des Primärdatensatzes aus dem in der Primärspeicherstelle befindlichen Primärdatensatz auszulesen;
die zweite Kopie in der zweiten Speicherstelle zu speichern;
den zweiten Index für die zweite Kopie zu erzeugen; und
eine Aufforderung an die Kopplungssystem-Schnittstelle zu senden, die zweite Kopie mit den weiteren Kopien des Datensatzes zu synchronisieren, wobei sich das zweite Programm ausführen lässt, um den zweiten Index an das dritte Programm zu senden;
bei welchem sich das Kopplungssystem-Schnittstellenprogramm betreiben lässt, um die Aufforderung zum Synchronisieren der zweiten Kopie an das Kopplungssystem weiterzuleiten;
bei welchem sich das Kopplungssystem betreiben lässt, um
den zweiten Index für die zweite Kopie in der vierten Speicherstelle zu speichern, und zwar als Reaktion auf die Aufforderung; und
ein zweites Token an die Kopplungssystemschnittstelle zu senden, wobei das zweite Token eine Stelle (=Ort) für das für die zweite Kopie zu verwendende Gültigkeits-Flag beinhaltet; und
bei welchem sich das Kopplungssystem-Schnittstellenprogramm ausführen lässt, um das zweite Token an das zweite Programm zu senden; und
bei welchem sich das zweite Programm ausführen lässt, um das zweite Token im zweiten Speicher zu speichern;

54. System nach Anspruch 52,
bei welchem sich das erste Programm ausführen lässt, um
die erste Kopie zu modifizieren;
den Primärdatensatz durch die erste Kopie zu ersetzen; und
das Kopplungssystem-Schnittstellenprogramm davon in Kenntnis zu setzen, dass der Primärdatensatz modifiziert wurde;
bei welchem sich das Kopplungssystem-Schnittstellenprogramm ausführen lässt, um das Kopplungssystem davon in Kenntnis zu setzen, dass der Primärdatensatz modifiziert wurde; und
wobei sich das Kopplungssystem ausführen lässt, um das zweite Gültigkeits-Flag zu setzen, um anzuzeigen, dass die zweite Kopie ungültig ist, und zwar als Reaktion darauf, dass das erste Programm das Kopplungssystem-Schnittstellenprogramm davon in Kenntnis gesetzt hat, dass der Primärdatensatz modifiziert wurde.

55. System nach Anspruch 52,
bei welchem sich Kopplungssystem betreiben lässt, um das zweite Gültigkeits-Flag auszulesen; und
sich das zweite Programm ausführen lässt, um
die zweite Kopie durch den Primärdatensatz zu ersetzen, wenn das zweite Gültigkeits-Flag ungültig ist; und
das zweite Gültigkeits-Flag auf gültig zu setzen.

56. System nach Anspruch 51,
bei welchem sich das zweite Programm ausführen lässt, um das Kopplungssystem-Schnittstellenprogramm davon in Kenntnis zu setzen, dass das zweite Programm auf die zweite Kopie zugreifen möchte;
bei welchem sich das Kopplungssystem-Schnittstellenprogramm ausführen lässt, um:
das zweite Gültigkeits-Flag auszulesen; und
das zweite Programm davon in Kenntnis zu setzen, dass die zweite Kopie ungültig ist, wenn das zweite Gültigkeits-Flag ungültig ist;
bei welchem sich das zweite Programm ausführen lässt, um die zweite Kopie durch den Primärdatensatz zu ersetzen;
bei welchem sich das Kopplungssystem-Schnittstellenprogramm ausführen lässt, um das zweite Gültigkeits-Flag zu setzen, um anzuzeigen, dass die zweite Kopie gültig ist; und
bei welchem sich das zweite Programm ausführen lässt, um auf die zweite Kopie zuzugreifen, wenn das zweite Gültigkeits-Flag gültig ist.

57. System nach Anspruch 48, bei welchem das Kopplungssystem-Schnittstellenprogramm eine Mehrzahl von Funktionen und eine Anwenderprogramm-Schnittstelle aufweist, wobei jede Funktion konfiguriert ist, um mindestens eine Datensynchronisierungsaufgabe durchzuführen, und die Anwenderprogramm-Schnittstelle aus einer Mehrzahl von Funktionsaufrufen besteht, die konfiguriert sind, um einen externen Zugriff auf die Funktionen bereitzustellen, und wobei auf die Funktionsaufrufe von einer Mehrzahl von Programmen zugegriffen werden kann.

58. System nach Anspruch 31, wobei der Primärdatensatz eine Entität (data record) ist.

59. System nach Anspruch 31, bei welchem der Primärdatensatz eine Datengruppe ist.

60. System nach Anspruch 31, bei welchem der Primärdatensatz eine Datentabelle ist.

61. Trägermedium, welches Programmanweisungen beinhaltet, wobei sich die Programmanweisungen durch eine Maschine (=Computeranlage) (300, 310, 330) ausführen lassen, um die in Anspruch 1 definierten Schritte zu implementieren.

62. Trägermedium nach Anspruch 61, bei welchem sich die Programmanweisungen weiter durch die Maschine ausführen lassen, um folgendes zu implementieren:
Ersetzen des Primärdatensatzes durch die modifizierte erste Kopie, und zwar nach dem Modifizieren der ersten Kopie und vor dem Setzen des zweiten Gültigkeits-Flags, um anzuzeigen, dass die zweite Kopie ungültig ist;
Ersetzen der zweiten Kopie durch den Primärdatensatz, und zwar nach dem Setzen des zweiten Gültigkeits-Flags, um anzuzeigen, dass die zweite Kopie ungültig ist; und
Setzen des zweiten Gültigkeits-Flags, um anzuzeigen, dass die zweite Kopie gültig ist, und zwar nach dem Ersetzen der zweiten Kopie durch den Primärdatensatz.

63. Trägermedium nach Anspruch 62, bei welchem ein erstes Programm der ersten Kopie zugehörig ist und ein zweites Programm der zweiten Kopie zugehörig ist.

64. Trägermedium nach Anspruch 61, bei welchem sich die Programmanweisungen weiter durch die Maschine ausführen lassen, um folgendes zu implementieren:
Auslesen des zweiten Gültigkeits-Flags als Reaktion auf ein Programm, das Zugriff auf die zweite Kopie fordert; und
Ersetzen der zweiten Kopie durch den Primärdatensatz, bevor der Zugriffforderung stattgegeben wird, falls das zweite Gültigkeits-Flag anzeigt, dass die zweite Kopie ungültig ist.

65. Trägermedium nach Anspruch 62, bei welchem sich die Programmanweisungen weiter durch die Maschine ausführen lassen, um folgendes zu implementieren:
Erzeugen eines der ersten Kopie zugehörigen ersten Index, wobei der erste Index in einer vierten Speicherstelle gespeichert wird und wobei der erste Index erzeugt wird, nachdem das Auslesen der ersten Kopie aus dem Primärdatensatz erfolgt ist; und
Erzeugen eines der zweiten Kopie zugehörigen zweiten Index, wobei der zweite Index in einer vierten Speicherstelle gespeichert wird und wobei der zweite Index erzeugt wird, nachdem das Auslesen der zweiten Kopie aus dem Primärdatensatz erfolgt ist.

66. Trägermedium nach Anspruch 65, bei welchem sich die Programmanweisungen weiter durch die Maschine ausführen lassen, um zu implementieren, das zweite Gültigkeits-Flag durch Verwenden des zweiten Index zu orten, und zwar vor dem Setzen des zweiten Gültigkeits-Flags, um anzuzeigen, dass die zweite Kopie ungültig ist.

67. Trägermedium nach Anspruch 66, bei welchem ein Index aufweist:
ein erstes Feld, dass eine Beschreibung einer Kopie der Daten enthält, für die der Index erzeugt wurde; und
ein zweites Feld, welches eine Speicherstelle für ein Gültigkeits-Flag für die Kopie des Datensatzes enthält, für die der Index erzeugt wurde.

68. Trägermedium nach Anspruch 67, bei welchem sich die Programmanweisungen weiter durch die Maschine ausführen lassen, um folgendes zu implementieren:
Abgleichen des ersten Index und des zweiten Index durch Vergleichen des ersten Feldes des ersten Index und des ersten Feldes des zweiten Index; und
Orten des zweiten Gültigkeits-Flags unter Bezugnahme auf die Inhalte des zweiten Feldes des zweiten Index.

69. Trägermedium nach Anspruch 68, bei welchem sich die Programmanweisungen weiter ausführen lassen, um folgendes zu implementieren:
Auslesen und Speichern einer Mehrzahl von Kopien des Primärdatensatzes an jeweiligen Speicherstellen; wobei beim Erzeugen einer Kopie des Primärdatensatzes sich die Programmanweisungen weiter durch die Maschine ausführen lassen, um folgendes zu implementieren:
Setzen eines Gültigkeits-Flags, um anzuzeigen, dass die Kopie gültig ist, als Reaktion auf das Auslesen und Speichern der Kopie; und
Erzeugen eines Index für die Kopie in der vierten Speicherstelle, als Reaktion auf das Auslesen und Speichern der Kopie.

70. Trägermedium nach Anspruch 69, bei welchem sich die Programmanweisungen weiter durch die Maschine ausführen lassen, um folgendes zu implementieren:
Setzen des Gültigkeits-Flags für jede Kopie außer der ersten Kopie auf ungültig, und zwar nach dem Modifizieren der ersten Kopie.

71. Trägermedium nach Anspruch 68, bei welchem ein erstes Programm der ersten Kopie zugehörig ist und ein zweites Programm der zweiten Kopie zugehörig ist.

72. Trägermedium nach Anspruch 71, bei welchem sich die Programmanweisungen weiter durch die Maschine ausführen lassen, um folgendes zu implementieren:
das erste Programm fordert ein drittes Programm dazu auf, die erste Kopie mit weiteren Kopien des Primärdatensatzes zu synchronisieren;
das dritte Programm erzeugt den ersten Index, der zu der in der vierten Speicherstelle befindlichen ersten Kopie gehört, und zwar als Reaktion darauf, dass das erste Programm dazu auffordert, dass das dritte Programm die erste Kopie mit weiteren Kopien des Primärdatensatzes synchronisiert;
das zweite Programm dazu auffordert, dass das dritte Programm die zweite Kopie mit weiteren Kopien des Primärdatensatzes synchronisiert; und
das dritte Programm erzeugt den zweiten Index, der zu der in der vierten Speicherstelle befindlichen zweiten Kopie gehört, und zwar als Reaktion darauf, dass das zweite Programm dazu auffordert, dass das dritte Programm die zweite Kopie mit weiteren Kopien des Primärdatensatzes synchronisiert.

73. Trägermedium nach Anspruch 71, bei welchem sich die Programmanweisungen weiter durch die Maschine ausführen lassen, um folgendes zu implementieren:
das erste Programm modifiziert die erste Kopie;
das erste Programm ersetzt den Primärdatensatz durch die erste Kopie;
das erste Programm setzt ein drittes Programm davon in Kenntnis, dass der Primärdatensatz modifiziert wurde; und
das dritte Programm setzt das zweite Gültigkeits-Flag, um anzuzeigen, dass die zweite Kopie ungültig ist, und zwar als Reaktion darauf, dass das erste Programm das dritte Programm davon in Kenntnis gesetzt hat, dass der Primärdatensatz modifiziert wurde, wobei das dritte Programm konfiguriert ist, um das Synchronisieren der Kopien der Datensätze zu verwalten.

74. Trägermedium nach Anspruch 73, bei welchem sich die Programmanweisungen weiter durch die Maschine ausführen lassen, um folgendes zu implementieren:
das zweite Programm setzt das dritte Programm davon in Kenntnis, dass das zweite Programm auf die zweite Kopie zugreifen möchte;
das dritte Programm liest das zweite Gültigkeits-Flag aus;
wenn das zweite Gültigkeits-Flag ungültig ist, setzt das dritte Programm das zweite Programm davon in Kenntnis, dass die zweite Kopie ungültig ist;
das zweite Programm liest den Primärdatensatz aus und ersetzt die zweite Kopie durch den Primärdatensatz;
das zweite Programm setzt das zweite Gültigkeits-Flag, um anzuzeigen, dass die zweite Kopie gültig ist; und
wenn das zweite Gültigkeits-Flag gültig ist, greift das zweite Programm auf die zweite Kopie zu.

75. Trägermedium nach Anspruch 73, bei welchem sich die Programmanweisungen weiter durch die Maschine ausführen lassen, um folgendes zu implementieren:
das dritte Programm liest das zweite Gültigkeits-Flags aus;
das zweite Programm liest den Primärdatensatz aus und ersetzt die zweite Kopie durch den Primärdatensatz, wenn das zweite Gültigkeits-Flag ungültig ist; und
das zweite Programm setzt das zweite Gültigkeits-Flag auf gültig.

76. Trägermedium nach Anspruch 61, bei welchem die Programmanweisungen weiter eine Mehrzahl von Funktionen und eine Anwenderprogramm-Schnittstelle aufweisen, wobei jede Funktion konfiguriert ist, um mindestens eine Datensynchronisierungsaufgabe durchzuführen, und die Anwenderprogramm-Schnittstelle aus einer Mehrzahl von Funktionsaufrufen besteht, die konfiguriert sind, um einen externen Zugriff auf die Funktionen bereitzustellen, und wobei auf die Funktionsaufiufe von einer Mehrzahl von Anwenderprogrammen zugegriffen werden kann.

77. Trägermedium nach Anspruch 61, bei welchem der Primärdatensatz eine Entität (data record) ist.

78. Trägermedium nach Anspruch 61, bei welchem der Primärdatensatz eine Datengruppe ist.

79. Trägermedium nach Anspruch 61, bei welchem der Primärdatensatz eine Datentabelle ist.

80. Trägermedium nach Anspruch 61, wobei es sich bei dem Trägermedium um ein Speichermedium handelt.

81. Verfahren nach Anspruch 1, bei welchem der Primärdatensatz finanzielle Transaktionsdaten betrifft.

82. System nach Anspruch 31, bei welchem der Primärdatensatz finanzielle Transaktionsdaten betrifft.

83. Trägermedium nach Anspruch 61, bei welchem der Primärdatensatz finanzielle Transaktionsdaten betrifft.

## Revendications

1. Procédé comprenant les étapes consistant à :
lire une première copie d'un ensemble de données primaires (40, 240, 325) dans un emplacement mémoire primaire (30, 220, 320) ;
mémoriser la première copie dans un premier emplacement mémoire (80, 255, 365) ;
positionner (401, 421, 441, 461) un premier drapeau de validité pour indiquer que la première copie est valide ;
lire une deuxième copie de l'ensemble de données primaires à l'emplacement mémoire primaire (30, 220, 320) ;
mémoriser la deuxième copie dans un deuxième emplacement mémoire (90, 275, 385) ;
positionner (403, 423, 444, 465) un deuxième drapeau de validité (355) pour indiquer que la deuxième copie est valide ;
modifier (404, 424, 446, 468) la première copie ;
**caractérisé en ce que** le procédé comprend en outre l'étape consistant à positionner (406, 426, 449, 471) le deuxième drapeau de validité pour indiquer que la deuxième copie est invalide en réponse à la modification de la première copie.

2. Procédé selon la revendication 1, comprenant en outre les étapes consistant à :
remplacer l'ensemble de données primaires par la première copie modifiée après la modification de la première copie et avant le positionnement du deuxième drapeau de validité pour indiquer que la deuxième copie est invalide ;
remplacer la deuxième copie par l'ensemble de données primaires après le positionnement du deuxième drapeau de validité pour indiquer que la deuxième copie est invalide ; et
positionner le deuxième drapeau de validité pour indiquer que la deuxième copie est valide après avoir remplacé la deuxième copie par l'ensemble de données primaires.

3. Procédé selon la revendication 2, dans lequel un premier programme est associé à la première copie, et un deuxième programme est associé à la deuxième copie.

4. Procédé selon la revendication 1, dans lequel le remplacement de la deuxième copie par l'ensemble de données primaires comprend en outre les opérations consistant à :
lire le deuxième drapeau de validité en réponse à un programme demandant l'accès à la deuxième copie ; et
remplacer la deuxième copie par l'ensemble de données primaires avant d'accéder à la demande d'accès si le deuxième drapeau de validité indique que la deuxième copie est invalide.

5. Procédé selon la revendication 2, comprenant en outre les étapes consistant à :
créer un premier index correspondant à la première copie, le premier index étant mémorisé dans un quatrième emplacement mémoire, le premier index étant créé après avoir lu la première copie dans l'ensemble de données primaires ; et
créer un deuxième index correspondant à la deuxième copie, le deuxième index étant mémorisé dans le quatrième emplacement mémoire, le deuxième index étant créé après avoir lu la deuxième copie dans l'ensemble de données primaires.

6. Procédé selon la revendication 5, comprenant en outre le fait de localiser le deuxième drapeau de validité en utilisant le deuxième index avant de positionner le deuxième drapeau de validité pour indiquer que la deuxième copie est invalide.

7. Procédé selon la revendication 6, dans lequel un index comprend :
un premier champ comprenant une description d'une copie des données pour lesquelles l'index a été créé ; et
un deuxième champ comprenant un emplacement mémoire pour un drapeau de validité pour la copie de l'ensemble de données pour lesquelles l'index a été créé.

8. Procédé selon la revendication 7, comprenant en outre les étapes consistant à :
apparier le premier index et le deuxième index en comparant le premier champ du premier index et le premier champ du deuxième index ; et
dans lequel la localisation du deuxième drapeau de validité comprend en outre le fait de localiser le deuxième drapeau de validité en référençant le contenu du deuxième champ du deuxième index.

9. Procédé selon la revendication 8, comprenant en outre les étapes consistant à :
lire et stocker une pluralité de copies de l'ensemble de données primaires en des emplacements mémoire respectifs ;
positionner un drapeau de validité pour indiquer que la copie est valide en réponse à la lecture et au stockage de la copie ; et
créer un index pour la copie dans le quatrième emplacement mémoire en réponse à la lecture et au stockage de la copie.

10. Procédé selon la revendication 9, comprenant en outre le fait de positionner le drapeau de validité de toute copie autre que la première copie comme invalide après modification de la première copie.

11. Procédé selon la revendication 8, dans lequel un premier programme est associé à la première copie et un deuxième programme est associé à la deuxième copie.

12. Procédé selon la revendication 11, comprenant en outre les opérations dans lesquelles :
le premier programme demande qu'un troisième programme synchronise la première copie avec d'autres copies du premier ensemble de données ;
le troisième programme crée le premier index correspondant à la première copie dans le quatrième emplacement mémoire en réponse à la demande du premier programme pour que le troisième programme synchronise la première copie avec les autres copies de l'ensemble de données primaires ;
le deuxième programme demande que le troisième programme synchronise la deuxième copie avec les autres copies de l'ensemble de données primaires ; et
le troisième programme crée le deuxième index correspondant à la deuxième copie dans le quatrième emplacement mémoire en réponse à la demande du deuxième programme pour que le troisième programme synchronise la deuxième copie avec les autres copies de l'ensemble de données primaires.

13. Procédé selon la revendication 11, comprenant en outre les opérations dans lesquelles :
le premier programme modifie la première copie ;
le premier programme remplace l'ensemble de données primaires par la première copie ;
le premier programme signale à un troisième programme que l'ensemble de données primaires a été modifié ; et
le troisième programme positionne le deuxième drapeau de validité pour indiquer que la deuxième copie est invalide en réponse à la notification par le premier programme au troisième programme que l'ensemble de données primaires a été modifié, le troisième programme étant configuré pour gérer la synchronisation de copies d'ensembles de données.

14. Procédé selon la revendication 13, comprenant en outre les opérations dans lesquelles :
le deuxième programme signale au troisième programme que le deuxième programme souhaite accéder à la deuxième copie ;
le troisième programme lit le deuxième drapeau de validité ;
quand le deuxième drapeau de validité est invalide, le troisième programme signale au deuxième programme que la deuxième copie est invalide,
le deuxième programme lit l'ensemble de données primaires et remplace la deuxième copie par l'ensemble de données primaires,
le deuxième programme positionne le deuxième drapeau de validité pour indiquer que la deuxième copie est valide ; et
quand le deuxième drapeau de validité est valide, le deuxième programme accède à la deuxième copie.

15. Procédé selon la revendication 13, comprenant en outre les opérations dans lesquelles :
le troisième programme lit le deuxième drapeau de validité ;
le deuxième programme lit l'ensemble de données primaires et remplace la deuxième copie par l'ensemble de données primaires quand le deuxième drapeau de validité est invalide ; et
le deuxième programme positionne le deuxième drapeau de validité comme valide.

16. Procédé selon la revendication 11, dans lequel le premier programme et le deuxième programme sont exécutables sur un système informatique, dans lequel le système informatique est une grappe, et dans lequel la grappe comprend :
une pluralité d'ordinateurs, où un ordinateur comprend une mémoire locale et au moins un drapeau de validité, et dans lequel on attribue à une copie d'un ensemble de données qui est stockée dans la mémoire locale au moins un drapeau de validité correspondant ;
un système de couplage comprenant une mémoire locale, où le système de couplage est connecté à chacun des ordinateurs de la grappe, et où le système de couplage est configuré pour coordonner le partage de données de la grappe ; et
un stockage externe de données partagé par les ordinateurs de la grappe.

17. Procédé selon la revendication 16, dans lequel chaque ordinateur comprend en outre un programme d'interface de système de couplage configuré pour communiquer entre le système de couplage et une pluralité de programmes exécutés sur l'ordinateur.

18. Procédé selon la revendication 17, dans lequel le programme d'interface de système de couplage établit et maintient une liaison de communication avec le système de couplage.

19. Procédé selon la revendication 17, dans lequel la mémoire locale d'un premier ordinateur de la grappe comprend le premier emplacement mémoire, la mémoire locale d'un deuxième ordinateur de la grappe comprend le deuxième emplacement mémoire, le stockage externe de données comprend l'emplacement mémoire primaire, et la mémoire locale du système de couplage comprend le quatrième emplacement mémoire.

20. Procédé selon la revendication 19, comprenant en outre le fait de créer une copie de l'ensemble de données primaires dans la mémoire locale d'une pluralité d'ordinateurs de la grappe, la création de la copie comprenant les opérations consistant à :
créer un index correspondant à la copie de l'ensemble de données primaires dans la mémoire locale du système de couplage ;
attribuer un drapeau de validité à la copie de l'ensemble de données primaires ; et
positionner le drapeau de validité pour indiquer que la copie de l'ensemble de données primaires est valide.

21. Procédé selon la revendication 20, comprenant en outre le fait de positionner le drapeau de validité de toute copie autre que la première copie comme invalide après modification de la première copie.

22. Procédé selon la revendication 19, dans lequel le premier ordinateur comprend en outre un premier programme associé à la première copie, et le deuxième ordinateur comprend en outre un deuxième programme associé à la deuxième copie.

23. Procédé selon la revendication 22, comprenant en outre les opérations dans lesquelles :
le premier programme lit la première copie de l'ensemble de données primaires depuis l'ensemble de données primaires dans l'emplacement mémoire primaire ;
le premier programme mémorise la première copie dans le premier emplacement mémoire ;
le premier programme crée le premier index de la première copie ;
le premier programme envoie une demande pour synchroniser la première copie avec les autres copies de l'ensemble de données primaires à l'interface du système de couplage, la demande comprenant le fait d'envoyer le premier index à un troisième programme ;
le programme d'interface de système de couplage transmet la demande pour synchroniser la première copie au système de couplage ;
le système de couplage mémorise le premier index de la première copie dans le quatrième emplacement mémoire en réponse à la demande ;
le système de couplage envoie un premier jeton à l'interface du système de couplage, le premier jeton comprenant un emplacement pour le drapeau de validité à utiliser pour la première copie ;
le programme d'interface de système de couplage envoie le premier jeton au premier programme ;
le premier programme stocke le premier jeton dans la première mémoire ;
le deuxième programme lit la deuxième copie de l'ensemble de données primaires depuis l'ensemble de données primaires dans l'emplacement mémoire primaire ;
le deuxième programme stocke la deuxième copie dans le deuxième emplacement mémoire ;
le deuxième programme crée le deuxième index de la deuxième copie ;
le deuxième programme envoie une demande pour synchroniser la deuxième copie avec les autres copies de l'ensemble de données primaires à l'interface du système de couplage, la demande comprenant le fait d'envoyer le deuxième index au troisième programme ;
le programme d'interface de système de couplage transmet la demande pour synchroniser la deuxième copie au système de couplage ;
le système de couplage mémorise le deuxième index de la deuxième copie dans le quatrième emplacement mémoire en réponse à la demande ;
le système de couplage envoie un deuxième jeton à l'interface du système de couplage, le deuxième jeton comprenant un emplacement pour le drapeau de validité à utiliser pour la deuxième copie ;
le programme d'interface de système de couplage envoie le deuxième jeton au deuxième programme ; et
le deuxième programme mémorise le deuxième jeton dans la deuxième mémoire.

24. Procédé selon la revendication 22, comprenant en outre les opérations dans lesquelles :
le premier programme modifie la première copie ;
le premier programme remplace l'ensemble de données primaires par la première copie ;
le premier programme signale au programme d'interface de système de couplage que l'ensemble de données primaires a été modifié ;
le programme d'interface de système de couplage signale au système de couplage que l'ensemble de données primaires a été modifié ; et
le système de couplage positionne le deuxième drapeau de validité pour indiquer que la deuxième copie est invalide en réponse à la notification par le premier programme au programme d'interface de système de couplage que l'ensemble de données primaires a été modifié.

25. Procédé selon la revendication 22, comprenant en outre les opérations dans lesquelles :
le système de couplage lit le deuxième drapeau de validité ;
le deuxième programme remplace la deuxième copie par l'ensemble de données primaires quand le deuxième drapeau de validité est invalide ; et
le deuxième programme positionne le deuxième drapeau de validité comme valide.

26. Procédé selon la revendication 21, comprenant en outre les opérations dans lesquelles :
le deuxième programme signale au programme d'interface de système de couplage que le deuxième programme souhaite accéder à la deuxième copie ;
le programme d'interface de système de couplage lit le deuxième drapeau de validité ;
le programme d'interface de système de couplage signale au deuxième programme que la deuxième copie est invalide quand le deuxième drapeau de validité est invalide ;
le deuxième programme remplace la deuxième copie par l'ensemble de données primaires ;
le programme d'interface de système de couplage positionne le deuxième drapeau de validité pour indiquer que la deuxième copie est valide ; et
le deuxième programme accède à la deuxième copie quand le deuxième drapeau de validité est valide.

27. Procédé selon la revendication 18, dans lequel le programme d'interface de système de couplage comprend une pluralité de fonctions et une interface de programmation d'application, où chaque fonction est configurée pour exécuter au moins une tâche de synchronisation de données, et où l'interface de programmation d'application est constituée d'une pluralité d'appels de fonction configurés pour fournir un accès externe aux fonctions, et où les appels de fonction sont accessibles à une pluralité de programmes d'application.

28. Procédé selon la revendication 1, dans lequel l'ensemble de données primaires est un enregistrement.

29. Procédé selon la revendication 1, dans lequel l'ensemble de données primaires est un groupe de données.

30. Procédé selon la revendication 1, dans lequel l'ensemble de données primaires est une table de données.

31. Système comprenant :
une pluralité d'ordinateurs (300, 310) formant une grappe, où un ordinateur (300, 310) comprend une mémoire locale et au moins un drapeau de validité (350, 355), et où l'on attribue à une copie d'un ensemble de données (325) qui est stocké dans la mémoire locale au moins un drapeau de validité correspondant (350, 355) ;
un système de couplage (336) comprenant une mémoire locale, où le système de couplage est connecté à chacun des ordinateurs de la grappe, et où le système de couplage est configuré pour coordonner le partage de données de la grappe ; et
un stockage externe (320) de données partagé par les ordinateurs de la grappe ;
dans lequel les mémoires locales des ordinateurs (300, 310) du système de couplage (330) mémorisent des instructions de programme, les instructions de programme étant exécutables par les ordinateurs ou le système de couplage pour :
lire une première copie d'un ensemble de données primaires (40, 240, 325) dans un emplacement mémoire primaire (30, 220, 320) ;
stocker la première copie dans un premier emplacement mémoire (80, 225, 365) ;
positionner (401, 421, 441, 461) un premier drapeau de validité (350) pour indiquer que la première copie est valide ;
lire une deuxième copie de l'ensemble de données primaires (40, 240, 325) dans l'emplacement mémoire primaire (30, 220, 320) ;
stocker la deuxième copie dans un deuxième emplacement mémoire (90, 275, 385) ;
positionner (403, 423, 444, 465) un deuxième drapeau de validité (355) pour indiquer que la deuxième copie est valide ;
modifier la première copie ;
**caractérisé en ce que** les instructions de programme sont en outre exécutables pour positionner (406, 426, 449, 471) le deuxième drapeau de validité (355) pour indiquer que la deuxième copie est invalide en réponse à la modification de la première copie.

32. Système selon la revendication 31, dans lequel les instructions de programme sont en outre exécutables pour :
remplacer l'ensemble de données primaires par la première copie modifiée après la modification de la première copie et avant le positionnement du deuxième drapeau de validité pour indiquer que la deuxième copie est invalide ;
remplacer la deuxième copie par l'ensemble de données primaires après le positionnement du deuxième drapeau de validité pour indiquer que la deuxième copie est invalide ; et
positionner le deuxième drapeau de validité pour indiquer que la deuxième copie est valide après avoir remplacé la deuxième copie par l'ensemble de données primaires.

33. Système selon la revendication 32, dans lequel les instructions de programme comprennent en outre un premier programme associé à la première copie et un deuxième programme associé à la deuxième copie.

34. Système selon la revendication 32, dans lequel dans le remplacement de la deuxième copie par l'ensemble de données primaires, les instructions de programme sont en outre exécutables pour :
lire le deuxième drapeau de validité en réponse à un programme demandant l'accès à la deuxième copie ; et
remplacer la deuxième copie par l'ensemble de données primaires avant d'accéder à la demande d'accès si le deuxième drapeau de validité indique que la deuxième copie est invalide.

35. Système selon la revendication 32, dans lequel les instructions de programme sont en outre exécutables pour :
créer un premier index correspondant à la première copie, le premier index étant mémorisé dans un quatrième emplacement mémoire, le premier index étant créé après avoir lu la première copie dans l'ensemble de données primaires ; et
créer un deuxième index correspondant à la deuxième copie, le deuxième index étant mémorisé dans le quatrième emplacement mémoire, le deuxième index étant créé après avoir lu la deuxième copie dans l'ensemble de données primaires.

36. Système selon la revendication 35, dans lequel les instructions de programme sont en outre exécutables pour localiser le deuxième drapeau de validité en utilisant le deuxième index avant de positionner le deuxième drapeau de validité pour indiquer que la deuxième copie est invalide.

37. Système selon la revendication 36, dans lequel un index comprend :
un premier champ comprenant une description d'une copie des données pour lesquelles l'index a été créé ; et
un deuxième champ comprenant un emplacement mémoire pour un drapeau de validité pour la copie de l'ensemble de données pour laquelle l'index a été créé.

38. Système selon la revendication 37, dans lequel, dans la localisation du deuxième drapeau de validité, les instructions de programme sont en outre exécutables pour :
apparier le premier index et le deuxième index en comparant le premier champ du premier index et le premier champ du deuxième index ; et
localiser le deuxième drapeau de validité en référençant le contenu du deuxième champ du deuxième index.

39. Système selon la revendication 38, dans lequel les instructions de programme sont en outre exécutables pour :
lire et stocker une pluralité de copies de l'ensemble de données primaires en des emplacements mémoire respectifs ;
positionner un drapeau de validité pour indiquer que la copie est valide en réponse à la lecture et au stockage de la copie ; et
créer un index pour la copie dans le quatrième emplacement mémoire en réponse à la lecture et au stockage de la copie.

40. Système selon la revendication 39, dans lequel les instructions de programme sont en outre exécutables pour positionner le drapeau de validité de toute copie autre que la première copie comme invalide après modification de la première copie.

41. Système selon la revendication 37, dans lequel les instructions de programme comprennent en outre un premier programme associé à la première copie et un deuxième programme associé à la deuxième copie.

42. Système selon la revendication 41, dans lequel les instructions de programme comprennent en outre un troisième programme, le troisième programme étant configuré pour gérer la synchronisation de copies d'ensembles de données utilisées par les premier et deuxième programmes.

43. Système selon la revendication 42,
dans lequel le premier programme est exécutable pour demander que le troisième programme synchronise la première copie avec d'autres copies de l'ensemble de données ;
dans lequel le troisième programme est exécutable pour créer le premier index correspondant à la première copie dans le quatrième emplacement mémoire en réponse à la demande du premier programme pour que le troisième programme synchronise la première copie avec les autres copies de l'ensemble de données ;
dans lequel le deuxième programme est exécutable pour demander que le troisième programme synchronise la deuxième copie avec les autres copies de l'ensemble de données primaires ; et
dans lequel le troisième programme est exécutable pour créer le deuxième index correspondant à la deuxième copie dans le quatrième emplacement mémoire en réponse à la demande du deuxième programme pour que le troisième programme synchronise la deuxième copie avec les autres copies de l'ensemble de données.

44. Système selon la revendication 42,
dans lequel le premier programme est exécutable pour :
modifier la première copie ;
remplacer l'ensemble de données primaires par la première copie ;
signaler au troisième programme que l'ensemble de données primaires a été modifié ; et
dans lequel le troisième programme est exécutable pour positionner le deuxième drapeau de validité pour indiquer que la deuxième copie est invalide en réponse à la notification par le premier programme au troisième programme que l'ensemble de données primaires a été modifié.

45. Système selon la revendication 44,
dans lequel le deuxième programme est exécutable pour signaler au troisième programme que le deuxième programme souhaite accéder à la deuxième copie ;
dans lequel le troisième programme est exécutable pour :
lire le deuxième drapeau de validité ; et
quand le deuxième drapeau de validité est invalide, signaler au deuxième programme que la deuxième copie est invalide,
remplacer la deuxième copie par l'ensemble de données primaires,
positionner le deuxième drapeau de validité pour indiquer que la deuxième copie est valide ; et
quand le deuxième drapeau de validité est valide, accéder à la deuxième copie.

46. Système selon la revendication 44,
dans lequel le troisième programme est exécutable pour lire le deuxième drapeau de validité ;
dans lequel le deuxième programme est exécutable pour :
remplacer la deuxième copie par l'ensemble de données primaires quand le deuxième drapeau de validité est invalide ; et
positionner le deuxième drapeau de validité comme valide.

47. Système selon la revendication 31, dans lequel chaque ordinateur stocke en outre un programme d'interface de système de couplage qui est exécutable pour communiquer entre le système de couplage et une pluralité de programmes exécutés sur l'ordinateur.

48. Système selon la revendication 47, dans lequel le programme d'interface de système de couplage est exécutable pour établir et maintenir une liaison de communication avec le système de couplage.

49. Système selon la revendication 47, dans lequel la mémoire locale d'un premier ordinateur de la grappe comprend le premier emplacement mémoire, la mémoire locale d'un deuxième ordinateur de la grappe comprend le deuxième emplacement mémoire, le stockage externe de données comprend l'emplacement mémoire primaire, et la mémoire locale du système de couplage comprend le quatrième emplacement mémoire.

50. Système selon la revendication 49, dans lequel les instructions de programme sont en outre exécutables pour créer une copie de l'ensemble de données primaires dans la mémoire locale d'une pluralité d'ordinateurs de la grappe, dans lequel, dans la création de la copie, les instructions de programme sont en outre exécutables pour :
créer un index correspondant à la copie de l'ensemble de données primaires dans la mémoire locale du système de couplage ;
attribuer un drapeau de validité à la copie de l'ensemble de données primaires ; et
positionner le drapeau de validité pour indiquer que la copie de l'ensemble de données primaires est valide.

51. Système selon la revendication 50, dans lequel les instructions de programme sont en outre exécutables pour positionner le drapeau de validité de toute copie autre que la première copie comme invalide après modification de la première copie.

52. Système selon la revendication 50, dans lequel le premier ordinateur comprend en outre un premier programme associé à la première copie, et le deuxième ordinateur comprend en outre un deuxième programme associé à la deuxième copie.

53. Système selon la revendication 52,
dans lequel le premier programme est exécutable pour :
lire la première copie de l'ensemble de données depuis l'ensemble de données primaires dans l'emplacement mémoire primaire ;
mémoriser la première copie dans le premier emplacement mémoire ;
créer le premier index de la première copie ; et
envoyer une demande pour synchroniser la première copie avec les autres copies de l'ensemble de données à l'interface du système de couplage, le premier programme étant exécutable pour envoyer le premier index à un troisième programme ;
dans lequel le programme d'interface de système de couplage est exécutable pour transmettre la demande pour synchroniser la première copie au système de couplage ;
dans lequel le système de couplage est exécutable pour :
mémoriser le premier index de la première copie dans le quatrième emplacement mémoire en réponse à la demande ; et
envoyer un premier jeton à l'interface du système de couplage, le premier jeton comprenant un emplacement pour le drapeau de validité à utiliser pour la première copie ;
dans lequel le programme d'interface de système de couplage est exécutable pour envoyer le premier jeton au premier programme ;
dans lequel le premier programme est exécutable pour stocker le premier jeton dans la première mémoire ;
dans lequel le deuxième programme est exécutable pour :
lire la deuxième copie de l'ensemble de données primaires depuis l'ensemble de données primaires dans l'emplacement mémoire primaire ;
stocker la deuxième copie dans le deuxième emplacement mémoire ;
créer le deuxième index de la deuxième copie ;
envoyer une demande pour synchroniser la deuxième copie avec les autres copies de l'ensemble de données primaires à l'interface du système de couplage, dans lequel le deuxième programme est exécutable pour envoyer le deuxième index au troisième programme ;
dans lequel le programme d'interface de système de couplage est exécutable pour transmettre la demande pour synchroniser la deuxième copie au système de couplage ;
dans lequel le système de couplage est exécutable pour :
mémoriser le deuxième index de la deuxième copie dans le quatrième emplacement mémoire en réponse à la demande ; et
envoyer un deuxième jeton à l'interface du système de couplage, le deuxième jeton comprenant un emplacement pour le drapeau de validité à utiliser pour la deuxième copie ;
dans lequel le programme d'interface de système de couplage est exécutable pour envoyer le deuxième jeton au deuxième programme ; et
dans lequel le deuxième programme est exécutable pour mémoriser le deuxième jeton dans la deuxième mémoire.

54. Système selon la revendication 52,
dans lequel le premier programme est exécutable pour :
modifier la première copie ;
remplacer l'ensemble de données primaires par la première copie ; et
signaler au programme d'interface de système de couplage que l'ensemble de données primaires a été modifié ;
dans lequel le programme d'interface de système de couplage est exécutable pour signaler au système de couplage que l'ensemble de données primaires a été modifié ; et
dans lequel le système de couplage est exécutable pour positionner le deuxième drapeau de validité pour indiquer que la deuxième copie est invalide en réponse à la notification par le premier programme au programme d'interface de système de couplage que l'ensemble de données primaires a été modifié.

55. Système selon la revendication 52,
dans lequel le système de couplage est exécutable pour lire le deuxième drapeau de validité ;
dans lequel le deuxième programme est exécutable pour :
remplacer la deuxième copie par l'ensemble de données primaires quand le deuxième drapeau de validité est invalide ; et
positionner le deuxième drapeau de validité comme valide.

56. Système selon la revendication 51,
dans lequel le deuxième programme est exécutable pour signaler au programme d'interface de système de couplage que le deuxième programme souhaite accéder à la deuxième copie ;
dans lequel le programme d'interface de système de couplage est exécutable pour :
lire le deuxième drapeau de validité ; et
signaler au deuxième programme que la deuxième copie est invalide quand le deuxième drapeau de validité est invalide ;
dans lequel le deuxième programme est exécutable pour remplacer la deuxième copie par l'ensemble de données primaires ;
dans lequel le programme d'interface de système de couplage est exécutable pour positionner le deuxième drapeau de validité pour indiquer que la deuxième copie est valide ; et
dans lequel le deuxième programme est exécutable pour accéder à la deuxième copie quand le deuxième drapeau de validité est valide.

57. Système selon la revendication 48, dans lequel le programme d'interface de système de couplage comprend une pluralité de fonctions et une interface de programmation d'application, où chaque fonction est configurée pour exécuter au moins une tâche de synchronisation de données, et où l'interface de programmation d'application est constituée d'une pluralité d'appels de fonction configurés pour fournir un accès externe aux fonctions, et où les appels de fonction sont accessibles à une pluralité de programmes.

58. Système selon la revendication 31, dans lequel l'ensemble de données primaires est un enregistrement.

59. Système selon la revendication 31, dans lequel l'ensemble de données primaires est un groupe de données.

60. Système selon la revendication 31, dans lequel l'ensemble de données primaires est une table de données.

61. Support comprenant des instructions de programme, dans lequel les instructions de programme sont exécutables par une machine (300, 310, 330) pour mettre en oeuvre les étapes définies dans la revendication 1.

62. Support selon la revendication 61, dans lequel les instructions de programme sont en outre exécutables par la machine pour :
remplacer l'ensemble de données primaires par la première copie modifiée après la modification de la première copie et avant le positionnement du deuxième drapeau de validité pour indiquer que la deuxième copie est invalide ;
remplacer la deuxième copie par l'ensemble de données primaires après le positionnement du deuxième drapeau de validité pour indiquer que la deuxième copie est invalide ; et
positionner le deuxième drapeau de validité pour indiquer que la deuxième copie est valide après avoir remplacé la deuxième copie par l'ensemble de données primaires.

63. Support selon la revendication 62, dans lequel un premier programme est associé à la première copie, et un deuxième programme est associé à la deuxième copie.

64. Support selon la revendication 61, dans lequel les instructions de programme sont en outre exécutables par la machine pour :
lire le deuxième drapeau de validité en réponse à un programme demandant l'accès à la deuxième copie ; et
remplacer la deuxième copie par l'ensemble de données primaires avant d'accéder à la demande d'accès si le deuxième drapeau de validité indique que la deuxième copie est invalide.

65. Support selon la revendication 62, dans lequel les instructions de programme sont en outre exécutables par la machine pour :
créer un premier index correspondant à la première copie, le premier index étant mémorisé dans un quatrième emplacement mémoire, le premier index étant créé après avoir lu la première copie dans l'ensemble de données primaires ; et
créer un deuxième index correspondant à la deuxième copie, le deuxième index étant mémorisé dans le quatrième emplacement mémoire, le deuxième index étant créé après avoir lu la deuxième copie dans l'ensemble de données primaires.

66. Support selon la revendication 65, dans lequel les instructions de programme sont en outre exécutables par la machine pour localiser le deuxième drapeau de validité en utilisant le deuxième index avant de positionner le deuxième drapeau de validité pour indiquer que la deuxième copie est invalide.

67. Support selon la revendication 66, dans lequel un index comprend :
un premier champ comprenant une description d'une copie des données pour lesquelles l'index a été créé ; et
un deuxième champ comprenant un emplacement mémoire pour un drapeau de validité pour la copie de l'ensemble de données pour lesquelles l'index a été créé.

68. Support selon la revendication 67, dans lequel les instructions de programme sont en outre exécutables par la machine pour :
apparier le premier index et le deuxième index en comparant le premier champ du premier index et le premier champ du deuxième index ; et
localiser le deuxième drapeau de validité en référençant le contenu du deuxième champ du deuxième index.

69. Support selon la revendication 68, dans lequel les instructions de programme sont en outre exécutables pour :
lire et stocker une pluralité de copies de l'ensemble de données primaires en des emplacements mémoire respectifs, dans lequel lors de la création d'une copie de l'ensemble de données primaires, les instructions de programme sont en outre exécutables par la machine pour :
positionner un drapeau de validité pour indiquer que la copie est valide en réponse à la lecture et au stockage de la copie ; et
créer un index pour la copie dans le quatrième emplacement mémoire en réponse à la lecture et au stockage de la copie.

70. Support selon la revendication 69, dans lequel les instructions de programme sont en outre exécutables par la machine pour positionner le drapeau de validité de toute copie autre que la première copie comme invalide après modification de la première copie.

71. Support selon la revendication 68, dans lequel un premier programme est associé à la première copie et un deuxième programme est associé à la deuxième copie.

72. Support selon la revendication 71, dans lequel les instructions de programme sont en outre exécutables par une machine pour mettre en oeuvre les opérations dans lesquelles :
le premier programme demande qu'un troisième programme synchronise la première copie avec d'autres copies de l'ensemble de données ;
le troisième programme crée le premier index correspondant à la première copie dans le quatrième emplacement mémoire en réponse à la demande du premier programme pour que le troisième programme synchronise la première copie avec les autres copies de l'ensemble de données ;
le deuxième programme demande que le troisième programme synchronise la deuxième copie avec les autres copies de l'ensemble de données ; et
le troisième programme crée le deuxième index correspondant à la deuxième copie dans le quatrième emplacement mémoire en réponse à la demande du deuxième programme pour que le troisième programme synchronise la deuxième copie avec les autres copies de l'ensemble de données.

73. Support selon la revendication 71, dans lequel les instructions de programme sont en outre exécutables par la machine pour mettre en oeuvre les opérations dans lesquelles :
le premier programme modifie la première copie ;
le premier programme remplace l'ensemble de données primaires par la première copie ;
le premier programme signale à un troisième programme que l'ensemble de données primaires a été modifié ; et
le troisième programme positionne le deuxième drapeau de validité pour indiquer que la deuxième copie est invalide en réponse à la notification par le premier programme au troisième programme que l'ensemble de données primaires a été modifié, le troisième programme étant configuré pour gérer la synchronisation de copies d'ensembles de données.

74. Support selon la revendication 73, dans lequel les instructions de programme sont en outre exécutables par la machine pour mettre en oeuvre les opérations dans lesquelles :
le deuxième programme signale au troisième programme que le deuxième programme souhaite accéder à la deuxième copie ;
le troisième programme lit le deuxième drapeau de validité ;
quand le deuxième drapeau de validité est invalide, le troisième programme signale au deuxième programme que la deuxième copie est invalide,
le deuxième programme lit l'ensemble de données primaires et remplace la deuxième copie par l'ensemble de données primaires,
le deuxième programme positionne le deuxième drapeau de validité pour indiquer que la deuxième copie est valide ; et
quand le deuxième drapeau de validité est valide, le deuxième programme accède à la deuxième copie.

75. Support selon la revendication 73, dans lequel les instructions de programme sont en outre exécutables par la machine pour mettre en oeuvre les opérations dans lesquelles :
le troisième programme lit le deuxième drapeau de validité ;
le deuxième programme lit l'ensemble de données primaires et remplace la deuxième copie par l'ensemble de données primaires quand le deuxième drapeau de validité est invalide ; et
le deuxième programme positionne le deuxième drapeau de validité comme valide.

76. Support selon la revendication 61, dans lequel les instructions de programme comprennent en outre une pluralité de fonctions et une interface de programmation d'application, où chaque fonction est configurée pour exécuter au moins une tâche de synchronisation de données, et où l'interface de programmation d'application est constituée d'une pluralité d'appels de fonction configurés pour fournir un accès externe aux fonctions, et où les appels de fonction sont accessibles à une pluralité de programmes d'application.

77. Support selon la revendication 61, dans lequel l'ensemble de données primaires est un enregistrement.

78. Support selon la revendication 61, dans lequel l'ensemble de données primaires est un groupe de données.

79. Support selon la revendication 61, dans lequel l'ensemble de données primaires est une table de données.

80. Support selon la revendication 61, dans lequel le support est une mémoire.

81. Support selon la revendication 1, dans lequel l'ensemble de données primaires concerne des données de transactions financières.

82. Support selon la revendication 31, dans lequel l'ensemble de données primaires concerne des données de transactions financières.

83. Support selon la revendication 61, dans lequel l'ensemble de données primaires concerne des données de transactions financières.
